# EUROPÄISCHE PATENTSCHRIFT

(11) **EP 4 009 125 B1**
(45) Veröffentlichungstag und Bekanntmachung des Hinweises auf die Patenterteilung: **29.01.2025**
(21) Anmeldenummer: 20211296.7
(22) Anmeldetag: 02.12.2020
(51) Int. Cl.: G05B 23/02, A01G 3/08, B60L 58/24

(54) **VERFAHREN ZUM BESTIMMEN EINER INFORMATION ÜBER EINEN ZUSTAND EINES ANTRIEBSMOTORSYSTEMS UND/ODER EINES ANTRIEBSAKKUMULATORPACKS EINES GARTEN-, FORST- UND/ODER BAUBEARBEITUNGSGERÄTS UND SYSTEM ZUM BESTIMMEN EINER INFORMATION ÜBER EINEN ZUSTAND EINES ANTRIEBSMOTORSYSTEMS UND/ODER EINES ANTRIEBSAKKUMULATORPACKS EINES GARTEN-, FORST- UND/ODER BAUBEARBEITUNGSGERÄTS**
METHOD FOR DETERMINING INFORMATION ABOUT A CONDITION OF A DRIVE MOTOR SYSTEM AND/OR A DRIVE ACCUMULATOR PACK OF A GARDENING, FORESTRY AND/OR CONSTRUCTION MACHINE AND SYSTEM FOR DETERMINING INFORMATION ABOUT THE CONDITION OF A DRIVE MOTOR SYSTEM AND/OR DRIVE MOTOR SYSTEM CONSTRUCTION PROCESSING EQUIPMENT
PROCEDE DE DETERMINATION D'INFORMATIONS CONCERNANT UNE CONDITION D'UN SYSTEME DE MOTEUR D'ENTRAINEMENT ET/OU D'UN PACK D'ACCUMULATEUR D'ENTRAINEMENT D'UNE MACHINE DE JARDINAGE, DE FORESTERIE ET/OU DE CONSTRUCTION ET D'UN SYSTEME POUR DETERMINER DES INFORMATIONS SUR L'ETAT D'UN SYSTEME DE MOTEUR D'ENTRAINEMENT ET/OU DE TRAITEMENT DE CONSTRUCTION DE SYSTEME DE MOTEUR D'ENTRAINEMENT ÉQUIPEMENT

(43) Veröffentlichungstag der Anmeldung: 08.06.2022
(73) Patentinhaber: Andreas Stihl AG & Co. KG, 71336 Waiblingen (DE)
(72) Erfinder: Sigle, Christian, 71384 Weinstadt (DE); Trinkle, Simon, 73667 Kaisersbach (DE); Naegele, Claus, 70563 Stuttgart (DE); Conrad, Nils, 71404 Korb (DE)
(74) Vertreter: Patentanwälte Ruff, Wilhelm, Beier, Dauster & Partner mbB

(56) Entgegenhaltungen:
- EP-A1- 3 591 836
- DE-A1- 102009 054 400
- DE-A1- 102011 103 797
- US-A1- 2019 010 880
- US-A1- 2019 156 226
- US-A1- 2020 263 622

## Beschreibung

### ANWENDUNGSGEBIET UND STAND DER TECHNIK

Die Erfindung bezieht sich auf ein Verfahren zum Bestimmen einer Information über einen Zustand eines Antriebsmotorsystems und/oder eines Antriebsakkumulatorpacks eines Garten-, Forst- und/oder Baubearbeitungsgeräts und ein System zum Bestimmen einer Information über einen Zustand eines Antriebsmotorsystems und/oder eines Antriebsakkumulatorpacks eines Garten-, Forst- und/oder Baubearbeitungsgeräts.

Die US 2019/0010880 A1 offenbart ein Verfahren zum Ermitteln einer Information zum Einstellen einer einstellbaren Komponente eines Verbrennungsmotorantriebssystems eines Garten- und/oder Forstgeräts. Das Verfahren weist die Schritte auf: Bereitstellen eines Kenngrößenparameters mittels eines mobilen Bereitstellungsgeräts, wobei der Kenngrößenparameter eine Kenngröße einer Umgebung des Garten- und/oder Forstgeräts beschreibt; und Ermitteln der Information zum Einstellen der einstellbaren Komponente in Abhängigkeit von dem bereitgestellten Kenngrößenparameter.

Die DE 10 2009 054 400 A1 und US2019/156226 offenbaren eine Auswerteeinrichtung, ein System und ein Verfahren zum Überprüfen einer Einrichtung eines Kraftfahrzeugs.

Die US2020/263622 offenbart die Vorhersage der Gerätewartung beinhaltet den Vergleich zwischen einem Temperaturergebnis aus einem Modell und der Verteilung der tatsächlich gemessenen Temperatur.

### AUFGABE UND LÖSUNG

Der Erfindung liegt als Aufgabe die Bereitstellung eines Verfahrens zum Bestimmen einer Information über einen Zustand eines Antriebsmotorsystems und/oder eines Antriebsakkumulatorpacks eines Garten-, Forst- und/oder Baubearbeitungsgeräts und eines Systems zum Bestimmen einer Information über einen Zustand eines Antriebsmotorsystems und/oder eines Antriebsakkumulatorpacks eines Garten-, Forst- und/oder Baubearbeitungsgeräts zugrunde, wobei das Verfahren und das System jeweils verbesserte Eigenschaften aufweisen, insbesondere mehr Funktionalitäten.

Die Erfindung löst diese Aufgabe durch die Bereitstellung eines Verfahrens mit den Merkmalen des Anspruchs 1 und eines Systems mit den Merkmalen des Anspruchs 12. Vorteilhafte Weiterbildungen und/oder Ausgestaltungen der Erfindung sind in den abhängigen Ansprüchen beschrieben.

Das erfindungsgemäße, insbesondere automatische, Verfahren ist zum, insbesondere automatischen, Bestimmen einer Information, insbesondere eines Werts der Information, über einen, insbesondere angenommenen und/oder tatsächlichen, Zustand, insbesondere einen Wert des Zustands, eines Antriebsmotorsystems und/oder eines Antriebsakkumulatorpacks eines Garten-, Forst- und/oder Baubearbeitungsgeräts ausgebildet bzw. konfiguriert bzw. vorgesehen. Das Verfahren umfasst bzw. weist die Schritte auf: Erfassen, insbesondere automatisches und/oder unmittelbares bzw. direktes Erfassen, mindestens einer Sensortemperatur, insbesondere eines Werts der Sensortemperatur, mindestens einer Temperatur-Komponente des Antriebsmotorsystems und/oder des Antriebsakkumulatorpacks mittels mindestens eines, insbesondere elektrischen, Komponenten-Temperatursensors, insbesondere des Antriebsmotorsystems und/oder des Antriebsakkumulatorpacks und/oder des Garten-, Forst- und/oder Baubearbeitungsgeräts, gleichzeitig mit und/oder zeitlich nach einem Betrieb des Antriebsmotorsystems und/oder des Antriebsakkumulatorpacks, insbesondere der Temperatur-Komponente, insbesondere und eines Heizers und/oder eines Kühlers und/oder eines Lüfters zum Heizen und/oder zum Kühlen des Antriebsakkumulatorpacks. Die Temperatur-Komponente erwärmt oder kühlt sich aufgrund des Betriebs bzw. durch den Betrieb ab. In anderen Worten: Die Sensortemperatur erhöht oder erniedrigt sich aufgrund des Betriebs. Ermitteln, insbesondere automatisches und/oder unmittelbares bzw. direktes Ermitteln und/oder Erfassen, von Betriebsdaten, insbesondere Werten der Betriebsdaten, des Betriebs, insbesondere gleichzeitig mit und/oder zeitlich nach dem Betrieb. Die Betriebsdaten sind von der Sensortemperatur verschiedenartig. Vergleichen, insbesondere automatisches Vergleichen, der erfassten Sensortemperatur oder einer auf der Sensortemperatur basierenden, insbesondere erfassten, Größe, insbesondere eines Werts der Größe, und der ermittelten Betriebsdaten oder einer auf den Betriebsdaten basierenden, insbesondere erfassten, Größe, insbesondere eines Werts der Größe, mittels eines Temperatur-Modells. Das Temperatur-Modell basiert auf mindestens einem Modell- bzw. Annahme-Zustand des Antriebsmotorsystems und/oder des Antriebsakkumulatorpacks, insbesondere auf einer Beschreibung des Modell-Zustands. Bestimmen, insbesondere automatisches Bestimmen, der Information in Abhängigkeit von einem Ergebnis des Vergleichens. Der Zustand ist zum Beispiel ein Verschmutzungs-, Wartungs- und/oder Defektzustand.

Das Verfahren ermöglicht ein mittelbares bzw. indirektes Bestimmen der Information, insbesondere des Zustands. In anderen Worten: die Information, insbesondere der Zustand, braucht oder kann nicht unmittelbar bzw. direkt bestimmt, insbesondere erfasst, werden. Zusätzlich oder alternativ ermöglicht das Verfahren ein Bestimmen der Information, insbesondere des Zustands, mit wenigen und/oder bereits vorhandenen Mitteln. Somit ermöglicht dies ein kostengünstiges Bestimmen der Information, insbesondere des Zustands.

Insbesondere kann das Verfahren umfassen bzw. aufweisen: Bestimmen des Zustands in Abhängigkeit von dem Ergebnis des Vergleichens. Insbesondere kann das Verfahren umfassen bzw. aufweisen: Bestimmen der Information in Abhängigkeit von dem bestimmten Zustand.

Der Zustand kann bestimmungs- bzw. ordnungsgemäß oder nicht-bestimmungs- bzw. ordnungsgemäß sein.

Das Garten-, Forst- und/oder Baubearbeitungsgerät kann ein bodengeführtes und/oder handgeführtes, insbesondere handgetragenes Garten-, Forst- und/oder Baubearbeitungsgerät sein. Insbesondere handgeführtes, insbesondere handgetragenes, Garten-, Forst- und/oder Baubearbeitungsgerät kann bedeuten, dass das Garten-, Forst- und/oder Baubearbeitungsgerät eine Masse von maximal 50 Kilogramm (kg), insbesondere von maximal 20 kg, insbesondere von maximal 10 kg, insbesondere von maximal 5 kg, und/oder von minimal 1 kg, insbesondere von minimal 2 kg, aufweisen kann. Zusätzlich oder alternativ kann das Garten-, Forst- und/oder Baubearbeitungsgerät eine Säge, insbesondere eine Kettensäge, oder ein Hochentaster oder ein Freischneider oder ein Blasgerät oder ein Trennschleifer oder ein Rasenmäher, insbesondere ein Rasenmähroboter, sein.

Der Komponenten-Temperatursensor kann die Temperatur-Komponente thermisch kontaktieren, insbesondere berühren.

Der Betrieb kann ein Motorbetrieb, insbesondere des Antriebsmotorsystems, sein. Zusätzlich oder alternativ kann der Betrieb ein Ent- und/oder Auflade- und/oder Heiz- und/oder Kühlbetrieb des Antriebsakkumulatorpacks sein. Insbesondere kann ein, insbesondere elektrisches, Ladegerät zum Aufladen des Antriebsakkumulatorpacks den Heizer und/oder den Kühler und/oder den Lüfter aufweisen bzw. umfassen. Zusätzlich oder alternativ kann das Kühlen nur bzw. rein mittels des Lüfters ausgeführt werden bzw. geschehen. Weiter zusätzlich oder alternativ kann das Heizen mittels des Heizers und/oder eines Auflade- und/oder Packstroms und des Lüfters ausgeführt werden bzw. geschehen.

Das Antriebsmotorsystem und/oder der Antriebsakkumulatorpack, insbesondere jeweils, können/kann bei, insbesondere zu, dem Betrieb Wärme erzeugen.

Das Erfassen der Sensortemperatur zeitlich nach dem Betrieb kann bis solange, z.B. zwei Stunden (h), nach dem Betrieb ausgeführt werden, wie die Temperatur-Komponente noch erwärmt oder abgekühlt sein kann, insbesondere ist. In anderen Worten. Das Erfassen der Sensortemperatur zeitlich nach dem Betrieb kann bis zum Erreichen eines Maximalzeitdauergrenzwerts, z.B. zwei h, nach dem Betrieb ausgeführt werden, insbesondere und danach nicht mehr.

Die Betriebsdaten können Betriebsdaten des Antriebsmotorsystems und/oder des Antriebsakkumulatorpacks, insbesondere der Temperatur-Komponente, und/oder des Heizers und/oder des Kühlers und/oder des Lüfters, insbesondere des Ladegeräts, aufweisen, insbesondere sein. Zusätzlich oder alternativ kann das Verfahren umfassen bzw. aufweisen: Erfassen der Betriebsdaten mittels mindestens eines, insbesondere elektrischen, Betriebsdaten-Sensors, insbesondere des Antriebsmotorsystems und/oder des Antriebsakkumulatorpacks und/oder des Garten-, Forst- und/oder Baubearbeitungsgeräts und/oder des Heizers und/oder des Kühlers und/oder des Lüfters, insbesondere des Ladegeräts. Weiter zusätzlich oder alternativ brauchen oder können die Betriebsdaten nicht die Sensortemperatur, insbesondere eine Temperatur, aufweisen, insbesondere sein.

Das Temperatur-Modell kann ein Temperatur-Entwicklungs- und/oder Zeitverlaufs-Modell sein. Zusätzlich oder alternativ kann das Temperatur-Modell auf einem bestimmungs- bzw. ordnungsgemäßen Modell-Zustand und/oder einem nicht-bestimmungs- bzw. ordnungsgemäßen Modell-Zustand basieren.

Das Bestimmen der Information kann zeitlich nach dem Vergleichen mittels des Temperatur-Modells ausgeführt werden. Zusätzlich oder alternativ kann das Vergleichen mittels des Temperatur-Modells zeitlich nach dem Erfassen der Sensortemperatur und/oder dem Ermitteln von den Betriebsdaten ausgeführt werden. Weiter zusätzlich oder alternativ kann das Ermitteln von den Betriebsdaten zeitlich vor, gleichzeitig mit und/oder zeitlich nach dem Erfassen der Sensortemperatur ausgeführt werden. Weiter zusätzlich oder alternativ können/kann das Erfassen der Sensortemperatur und/oder das Ermitteln von den Betriebsdaten, insbesondere mehrfach, wiederholt bzw. zeitlich dauerhaft bzw. kontinuierlich ausgeführt werden. Weiter zusätzlich oder alternativ können/kann die auf der Sensortemperatur basierende Größe und/oder die auf den Betriebsdaten basierende Größe, insbesondere jeweils, ein zeitlicher Verlauf bzw. ein zeitlicher Gradient oder eine zeitliche Ableitung sein, insbesondere ermöglicht durch das wiederholte Ausführen. Weiter zusätzlich oder alternativ kann das Verfahren, insbesondere mehrfach, wiederholt bzw. zeitlich dauerhaft bzw. kontinuierlich ausgeführt werden.

In einer Weiterbildung der Erfindung hängen die Betriebsdaten mit einer Energiezufuhr, insbesondere einem Wert der Energiezufuhr, des Betriebs, insbesondere zu dem Betrieb, und/oder einer, insbesondere bestimmungs- bzw. ordnungsgemäßen, Wärmeabfuhr, insbesondere eines Werts der Wärmeabfuhr und/oder einer Soll-Wärmeabfuhr, aufgrund des Betriebs bzw. durch den Betrieb zusammen. Insbesondere umfassen bzw. weisen die Betriebsdaten eine Betriebslaufzeitdauer, insbesondere einen Wert der Betriebslaufzeitdauer, und/oder einen Betriebsstrom, insbesondere einen Wert des Betriebsstroms und/oder einen Motorstrom und/oder einen Packstrom, und/oder eine Betriebsspannung, insbesondere einen Wert der Betriebsspannung und/oder eine Motorspannung und/oder eine Packspannung, und/oder eine Drehzahl, insbesondere einen Wert der Drehzahl und/oder eine Motordrehzahl, und/oder ein Einspritzverhältnis, insbesondere einen Wert des Einspritzverhältnisses, und/oder eine Einspritzmenge, insbesondere einen Wert der Einspritzmenge, und/oder eine Kraftstoffmenge, insbesondere einen Wert der Kraftstoffmenge, auf. Die Energiezufuhr ermöglicht, insbesondere ermöglichen/ermöglicht die Betriebslaufzeitdauer, der Betriebsstrom, die Betriebsspannung, die Drehzahl, das Einspritzverhältnis, die Einspritzmenge und/oder die Kraftstoffmenge, dass die Temperatur-Komponente sich aufgrund des Betriebs erwärmen kann, und/oder dass das Temperatur-Modell auf Joulescher Wärme, insbesondere erzeugt durch den Betriebsstrom und/oder Schaltverluste, insbesondere erzeugt durch den Betriebsstrom und die Betriebsspannung, und/oder Reibungswärme, insbesondere erzeugt durch die Drehzahl, basieren kann. Zusätzlich oder alternativ ermöglicht die Wärmeabfuhr, insbesondere ermöglicht die Drehzahl, eine Kühlung der Temperatur-Komponente und somit, dass die Temperatur-Komponente sich nicht so schnell und/oder nur auf einen Gleichgewichtstemperaturwert erwärmen kann, und/oder dass das Temperatur-Modell auf Lüftungs-Kühlung basieren kann.

Insbesondere kann das Antriebsmotorsystem ein Elektroantriebsmotorsystem oder ein Verbrennungsantriebsmotorsystem sein.

In einer Weiterbildung der Erfindung ist die Temperatur-Komponente ein Elektroantriebsmotor oder ein Verbrennungsantriebsmotor oder eine Motorelektronik, insbesondere eine Motor-Leistungselektronik, oder eine Akkumulatorzelle oder eine Packelektronik, insbesondere eine Pack-Leistungselektronik. Insbesondere kann die Sensortemperatur eine Zylinderkopftemperatur sein.

Erfindungsgemäß umfasst bzw. weist das Verfahren auf: Ermitteln, insbesondere automatisches Ermitteln und/oder Berechnen, mindestens einer Modelltemperatur, insbesondere eines Werts der Modelltemperatur, oder einer für die Modelltemperatur repräsentativen, insbesondere auf der Modelltemperatur basierenden, Größe, insbesondere eines Werts der Größe, der mindestens einen Temperatur-Komponente basierend auf den ermittelten Betriebsdaten mittels des Temperatur-Modells, insbesondere wiederholt, insbesondere mehrfach wiederholt. Vergleichen, insbesondere automatisches Vergleichen, der erfassten Sensortemperatur oder der auf der Sensortemperatur basierenden Größe mit der ermittelten Modelltemperatur oder der ermittelten für die Modelltemperatur repräsentativen Größe, insbesondere wiederholt, insbesondere mehrfach wiederholt. Insbesondere kann das Temperatur-Modell auf Joulescher Wärme und/oder Reibungswärme und/oder Konvektion, insbesondere Konvektions-Kühlung, und/oder Lüftungs-Kühlung basieren. In einer Ausgestaltung der Erfindung umfasst bzw. weist das Verfahren, insbesondere das Vergleichen, auf: Ermitteln, insbesondere automatisches Ermitteln und/oder Berechnen, einer Abweichung, insbesondere eines Werts der Abweichung und/oder einer Differenz, der erfassten Sensortemperatur oder der auf der Sensortemperatur basierenden Größe von der ermittelten Modelltemperatur oder der für die Modelltemperatur repräsentativen Größe, soweit ermittelt, insbesondere wiederholt, insbesondere mehrfach wiederholt. Bestimmen, insbesondere automatisches Bestimmen, der Information in Abhängigkeit von der ermittelten Abweichung, insbesondere Bestimmen der Information über entweder einen, insbesondere den und/oder angenommenen und/oder tatsächlichen, bestimmungsgemäßen Zustand, falls die ermittelte Abweichung kleiner als ein Abweichungsgrenzwert ist, und/oder einen, insbesondere den und/oder angenommenen und/oder tatsächlichen, nicht-bestimmungsgemäßen Zustand, falls die ermittelte Abweichung gleich oder größer als der Abweichungsgrenzwert ist.

In einer Weiterbildung, insbesondere einer Ausgestaltung, der Erfindung umfasst bzw. weist das Verfahren auf: Absenken, insbesondere automatisches Absenken, mindestens einer maximal freigegebenen Antriebs- und/oder Aufladeleistung, insbesondere mindestens eines maximal freigegebenen Werts der Antriebs- und/oder Aufladeleistung, insbesondere für mindestens eine zugeordnete Drehzahl, insbesondere für mindestens einen zugeordneten Wert der Drehzahl, des Antriebsmotorsystems und/oder des Antriebsakkumulatorpacks, in Abhängigkeit von der bestimmten Information, insbesondere über den nicht-bestimmungsgemäßen Zustand, soweit bzw. falls bestimmt. Insbesondere Abschalten, insbesondere automatisches Abschalten, des Antriebsmotorsystems und/oder des Antriebsakkumulatorpacks, in Abhängigkeit von der bestimmten Information, insbesondere über den nicht-bestimmungsgemäßen Zustand, soweit bzw. falls bestimmt. Dies ermöglicht ein Risiko einer Schädigung, insbesondere aufgrund einer zu hohen Erwärmung, des Antriebsmotorsystems und/oder des Antriebsakkumulatorpacks und/oder des Garten-, Forst- und/oder Baubearbeitungsgeräts zu reduzieren oder sogar zu vermeiden. Insbesondere kann das Verfahren umfassen bzw. aufweisen: Anpassen, insbesondere Absenken, mindestens eines Abschnitts einer Leistungskennlinie, insbesondere wobei die Leistungskennlinie der mindestens einen Drehzahl die maximal freigegebene Antriebs- und/oder Aufladeleistung zuordnen kann, insbesondere für eine niedrige Drehzahl, insbesondere mit einer geringen Wärmeabfuhr bzw. Kühlleistung.

In einer Weiterbildung, insbesondere einer Ausgestaltung, der Erfindung umfasst bzw. weist das Verfahren den Schritt auf: Ausgeben, insbesondere automatisches Ausgeben, und/oder Übertragen, insbesondere automatisches Übertragen, der Information. Insbesondere nennt bzw. umfasst bzw. weist die Information den bestimmten Zustand und/oder einen Absenkungs- und/oder Abschaltungs-Hinweis und/oder einen Reinigungs-, Wartungs- und/oder Reparatur-Hinweis auf. Dies ermöglicht, insbesondere einem Benutzer, das Absenken der maximal freigegebenen Antriebs- und/oder Aufladeleistung, insbesondere das Abschalten des Antriebsmotorsystems und/oder des Antriebsakkumulatorpacks, als begründet zu erkennen und/oder nach dem Antriebsmotorsystem und/oder dem Antriebsakkumulatorpack und/oder dem Garten-, Forst- und/oder Baubearbeitungsgerät zu schauen, insbesondere dieses/diesen zu reinigen, zu warten und/oder zu reparieren, insbesondere bevor dieses/dieser eine Schädigung aufweisen oder haben kann. Insbesondere kann die Information den Absenkungs- und/oder Abschaltungs-Hinweis und/oder den Reinigungs-, Wartungs- und/oder Reparatur-Hinweis aufweisen, soweit bzw. falls die Information über den nicht-bestimmungsgemäßen Zustand oder dieser bestimmt ist. Zusätzlich oder alternativ kann das Verfahren umfassen bzw. aufweisen: Bestimmen des Absenkungs- und/oder Abschaltungs-Hinweises und/oder des Reinigungs-, Wartungs- und/oder Reparatur-Hinweises in Abhängigkeit von dem, insbesondere bestimmten, nicht-bestimmungsgemäßen Zustand. Weiter zusätzlich oder alternativ kann das Ausgeben optisch, akustisch und/oder haptisch sein. Weiter zusätzlich oder alternativ kann das Übertragen kabellos bzw. drahtlos sein und/oder ein Senden aufweisen, insbesondere sein.

Weiter zusätzlich oder alternativ kann die Information an eine, insbesondere elektronische, Datenbank, insbesondere des Benutzers, übertragen werden.

In einer Weiterbildung, insbesondere einer Ausgestaltung, der Erfindung umfasst bzw. weist das Verfahren auf: Bestimmen, insbesondere automatisches Bestimmen, der Information über den Zustand einer Zustands-Komponente des Antriebsmotorsystems und/oder des Antriebsakkumulatorpacks in Abhängigkeit von dem Ergebnis des Vergleichens. Insbesondere ist die Zustands-Komponente ein, insbesondere der, Elektroantriebsmotor oder ein, insbesondere der, Verbrennungsantriebsmotor, insbesondere ein Motor-Lager, oder eine, insbesondere die, Motorelektronik, insbesondere eine, insbesondere die, Motor-Leistungselektronik, oder ein Steuergerät oder ein Luftfilter, insbesondere ein Verbrennungs-Luftfilter und/oder ein Kühl-Luftfilter, oder ein Luftfiltergitter oder ein Kühler, insbesondere ein Kühlkörper, insbesondere Kühlrippen, und/oder ein Kühl-Lüfter, insbesondere ein Lüfterrad, und/oder ein Kühler-Lager, oder eine Luftein- und/oder Auslass, insbesondere eine Lufteinlass- und/oder Auslassöffnung, oder ein Pack-Schacht oder eine, insbesondere die, Akkumulatorzelle oder eine, insbesondere die, Packelektronik, insbesondere eine, insbesondere die, Pack-Leistungselektronik. In der Regel kann eine derartige Zustands-Komponente aufweisend den nicht-bestimmungsgemäßen Zustand eine übermäßig hohe Erwärmung der Temperatur-Komponente aufgrund des Betriebs verursachen. Insbesondere können die Temperatur-Komponente und die Zustands-komponente identisch oder verschieden, insbesondere verschiedenartig, sein.

In einer Ausgestaltung der Erfindung umfassen/umfasst bzw. weisen/weist das Antriebsmotorsystem und/oder der Antriebsakkumulatorpack mehrere Zustands-Komponenten auf. Das Verfahren umfasst bzw. weist auf: Identifizieren, insbesondere automatisches Identifizieren, der Zustands-Komponente aufweisend den nicht-bestimmungsgemäßen Zustand, insbesondere mittels Variierens, insbesondere automatischen Variierens, mindestens eines Modellparameters, insbesondere eines Werts des Modellparameters, des Temperatur-Modells und/oder mittels eines, insbesondere erweiterten, Kalman-Filters. Insbesondere kann die Information über die identifizierte Zustands-Komponente sein, insbesondere die Zustands-Komponente aufweisen bzw. nennen. Dies kann ermöglichen nach der identifizierten Zustands-Komponente, insbesondere gezielt, zu schauen.

In einer Weiterbildung der Erfindung umfasst bzw. weist das Verfahren auf: Ermitteln, insbesondere automatisches und/der unmittelbares bzw. direktes Ermitteln und/oder Erfassen, einer Umgebungstemperatur, insbesondere eines Werts der Umgebungstemperatur, einer Umgebung des Antriebsmotorsystems und/oder des Antriebsakkumulatorpacks, insbesondere des Garten-, Forst- und/oder Baubearbeitungsgeräts. Vergleichen der erfassten Sensortemperatur oder der auf der Sensortemperatur basierenden Größe und der ermittelten Betriebsdaten oder der auf den Betriebsdaten basierenden Größe mittels des Temperatur-Modells unter Berücksichtigung, insbesondere Hinzufügung, der ermittelten Umgebungstemperatur. Dies, insbesondere die Umgebung, ermöglicht eine Wärmeabfuhr und somit eine Kühlung der Temperatur-Komponente und somit, dass die Temperatur-Komponente sich nicht so schnell und/oder nur auf einen Gleichgewichtstemperaturwert erwärmen kann, und/oder dass das Temperatur-Modell auf Konvektion, insbesondere Konvektions-Kühlung, und/oder auf Lüftungs-Kühlung basieren kann. Somit ermöglicht dies ein genaues Vergleichen und/oder ein genaues Ermitteln der Modelltemperatur oder der für die Modelltemperatur repräsentativen Größe, soweit vorgesehen, und somit ein genaues Bestimmen der Information, insbesondere des Zustands.

In einer Ausgestaltung der Erfindung umfasst bzw. weist das Verfahren auf: Erfassen, insbesondere automatisches Erfassen, der Umgebungstemperatur mittels des mindestens einen Komponenten-Temperatursensors zeitlich vor dem Betrieb. Dies ermöglicht das Erfassen der Umgebungstemperatur mit einem bereits vorhandenen Mittel. Somit ermöglicht dies ein besonders kostengünstiges Bestimmen der Information, insbesondere des Zustands. Insbesondere kann das Erfassen der Umgebungstemperatur zeitlich vor dem Betrieb erst zeitlich, z.B. zwei h, nach einem Betrieb ausgeführt werden, wenn die Temperatur-Komponente kaum noch oder nicht mehr erwärmt oder abgekühlt und/oder an die Umgebung, insbesondere ihre Umgebungstemperatur, angeglichen sein kann, insbesondere ist. In anderen Worten: Das Erfassen der Umgebungstemperatur zeitlich vor dem Betrieb kann erst zeitlich nach Erreichen eines, insbesondere des, Maximalzeitdauergrenzwerts, z.B. zwei h, nach dem Betrieb ausgeführt werden.

In einer Ausgestaltung der Erfindung umfasst bzw. weist das Verfahren auf: Erfassen, insbesondere automatisches Erfassen, der Umgebungstemperatur mittels mindestens einen, insbesondere elektrischen, Umgebungs-Temperatursensors. Der Umgebungs-Temperatursensor ist verschieden von dem Komponenten-Temperatursensor und/oder getrennt bzw. separat von der Temperatur-Komponente, insbesondere dem Antriebsmotorsystem und/oder dem Antriebsakkumulatorpack, insbesondere dem Garten-, Forst- und/oder Baubearbeitungsgerät. Dies ermöglicht ein unabhängiges Erfassen der Umgebungstemperatur. Insbesondere kann das Garten-, Forst- und/oder Baubearbeitungsgerät den Umgebungs-Temperatursensor aufweisen bzw. umfassen. In anderen Worten: Der Umgebungs-Temperatursensor kann ein Teil des Garten-, Forst- und/oder Baubearbeitungsgeräts bzw. in dieses integriert sein.

In einer Ausgestaltung der Erfindung umfasst bzw. weist das Verfahren auf: Ermitteln, insbesondere automatisches Ermitteln und/oder Erfassen oder Vorgeben, einer Position, insbesondere eines Werts der Position, des Antriebsmotorsystems und/oder des Antriebsakkumulatorpacks, insbesondere des Garten-, Forst- und/oder Baubearbeitungsgeräts, und/oder der Umgebung. Ermitteln, insbesondere automatisches Ermitteln und/oder Empfangen, der Umgebungstemperatur in Abhängigkeit von der ermittelten Position, insbesondere aus einer, insbesondere elektronischen, Temperatur-Datenbank, insbesondere einer Wetterapp. Insbesondere kann das Empfangen kabellos bzw. drahtlos sein.

Das erfindungsgemäße, insbesondere elektrische, System ist zum, insbesondere zu dem und/oder automatischen, Bestimmen einer, insbesondere der, Information über einen, insbesondere den, Zustand eines, insbesondere des, Antriebsmotorsystems und/oder eines, insbesondere des, Antriebsakkumulatorpacks eines, insbesondere des, Garten-, Forst- und/oder Baubearbeitungsgeräts ausgebildet bzw. konfiguriert. Das System umfasst bzw. weist eine, insbesondere elektrische, Erfassungseinrichtung, eine, insbesondere elektrische, Ermittlungseinrichtung, eine, insbesondere elektrische, Vergleichseinrichtung und eine, insbesondere elektrische, Bestimmungseinrichtung auf. Die Erfassungseinrichtung ist zum, insbesondere zu dem und/oder automatischen, Erfassen mindestens einer, insbesondere der mindestens einen, Sensortemperatur mindestens einer, insbesondere der mindestens einen, Temperatur-Komponente des Antriebsmotorsystems und/oder des Antriebsakkumulatorpacks mittels mindestens eines, insbesondere des mindestens einen, Komponenten-Temperatursensors gleichzeitig mit und/oder zeitlich nach einem, insbesondere dem, Betrieb des Antriebsmotorsystems und/oder des Antriebsakkumulatorpacks, insbesondere und eines, insbesondere des, Heizers und/oder eines, insbesondere des, Kühlers und/oder eines, insbesondere des, Lüfters zum Heizen und/oder zum Kühlen des Antriebsakkumulatorpacks, wobei die Temperatur-Komponente sich aufgrund des Betriebs erwärmt oder abkühlt, ausgebildet bzw. konfiguriert. Die Ermittlungseinrichtung ist zum, insbesondere zu dem und/oder automatischen, Ermitteln, insbesondere Erfassen, von, insbesondere den, Betriebsdaten des Betriebs, wobei die Betriebsdaten von der Sensortemperatur verschiedenartig sind, ausgebildet bzw. konfiguriert. Die Vergleichseinrichtung ist zum, insbesondere zu dem und/oder automatischen, Vergleichen der erfassten Sensortemperatur oder einer, insbesondere der, auf der Sensortemperatur basierenden Größe und der ermittelten Betriebsdaten oder einer, insbesondere der, auf den Betriebsdaten basierenden Größe mittels eines, insbesondere des, Temperatur-Modells, wobei das Temperatur-Modell auf mindestens einem, insbesondere dem mindestens einen, Modell-Zustand des Antriebsmotorsystems und/oder des Antriebsakkumulatorpacks basiert, ausgebildet bzw. konfiguriert. Die Bestimmungseinrichtung ist zum, insbesondere zu dem und/oder automatischen, Bestimmen der Information in Abhängigkeit von einem, insbesondere dem, Ergebnis des Vergleichens ausgebildet bzw. konfiguriert. Der Zustand ist ein, insbesondere der, Verschmutzungs-, Wartungs- und/oder Defektzustand.

Das System kann den/die gleichen Vorteile ermöglichen wie das Verfahren vorhergehend genannt.

Insbesondere kann das System zum, insbesondere automatischen, Ausführen eines, insbesondere des, Verfahrens wie vorhergehend genannt ausgebildet bzw. konfiguriert sein.

Die Erfassungseinrichtung kann den Komponenten-Temperatursensor umfassen bzw. aufweisen, insbesondere sein.

Die Ermittlungseinrichtung kann den Betriebsdaten-Sensor, soweit vorhanden, umfassen bzw. aufweisen, insbesondere sein.

Die Vergleichseinrichtung und/oder die Bestimmungseinrichtung, insbesondere jeweils, können/kann eine Rechen- und/oder Speichereinrichtung umfassen bzw. aufweisen, insbesondere sein.

Das System kann eine, insbesondere elektrische, Ausgabe- und Übertragungseinrichtung umfassen bzw. aufweisen, wobei die Ausgabe- und Übertragungseinrichtung zu einem, insbesondere dem und/oder automatischen, Ausgeben und/oder einem, insbesondere dem und/oder automatischen, Übertragen der Information ausgebildet bzw. konfiguriert sein kann. Insbesondere kann die Ausgabe- und/oder Übertragungseinrichtung eine Anzeige, einen Schallerzeuger und/oder eine Vibrationseinrichtung umfassen bzw. aufweisen. Zusätzlich oder alternativ kann die Ausgabe- und/oder Übertragungseinrichtung eine, insbesondere elektrische und/oder kabellose bzw. drahtlose, Sendeeinrichtung umfassen bzw. aufweisen. Insbesondere kann die Sendeeinrichtung eine UMTS-, WLAN-, und/oder Bluetooth-Sendeeinrichtung oder eine auf einer anderen Technik basierende Sendeeinrichtung umfassen bzw. aufweisen, insbesondere sein.

Das System kann ein, insbesondere elektrisches, mobiles bzw. portables, insbesondere handgetragenes, Gerät umfassen bzw. aufweisen. Das mobile Gerät kann getrennt bzw. separat von dem Garten-, Forst- und/oder Baubearbeitungsgerät sein. Das mobile Gerät kann die Erfassungseinrichtung, die Ermittlungseinrichtung, die Vergleichseinrichtung, die Bestimmungseinrichtung und/oder die Ausgabe- und Übertragungseinrichtung, soweit vorhanden, aufweisen. Insbesondere können das Garten-, Forst- und/oder Baubearbeitungsgerät und das mobile Gerät, insbesondere jeweils, eine, insbesondere elektrische und/oder kabellose bzw. drahtlose, Übertragungseinrichtung zum Übertragen der Sensortemperatur und/oder der Betriebsdaten von dem Garten-, Forst- und/oder Baubearbeitungsgerät zu dem mobilen Gerät umfassen bzw. aufweisen. Insbesondere können die Übertragungseinrichtungen UMTS-, WLAN-, und/oder Bluetooth-Übertragungseinrichtungen oder auf einer anderen Technik basierende Übertragungseinrichtung umfassen bzw. aufweisen, insbesondere sein. Zusätzlich oder alternativ kann das mobile Gerät ein Smartphone und/oder eine Smartwatch umfassen bzw. aufweisen, insbesondere sein.

In einer Weiterbildung der Erfindung umfasst bzw. weist das System das Antriebsmotorsystem und/oder den Antriebsakkumulatorpack, insbesondere das Garten-, Forst- und/oder Baubearbeitungsgerät, insbesondere und den Heizer und/oder den Kühler und/oder den Lüfter, insbesondere ein, insbesondere das, Ladegerät zum Aufladen des Antriebsakkumulatorpacks aufweisend bzw. umfassend den Heizer und/oder den Kühler und/oder den Lüfter, und/oder ein, insbesondere elektrisches, mobiles bzw. portables, insbesondere handgetragenes, Ermittlungsgerät auf. Das Ermittlungsgerät ist getrennt bzw. separat von der Temperatur-Komponente, insbesondere dem Antriebsmotorsystem und/oder dem Antriebsakkumulatorpack, insbesondere dem Garten-, Forst- und/oder Baubearbeitungsgerät. Das Ermittlungsgerät ist zum, insbesondere zu dem und/oder automatischen, Ermitteln, insbesondere Erfassen und/oder Empfangen, einer, insbesondere der, Umgebungstemperatur einer, insbesondere der, Umgebung des Antriebsmotorsystems und/oder des Antriebsakkumulatorpacks, insbesondere des Garten-, Forst- und/oder Baubearbeitungsgeräts, ausgebildet bzw. konfiguriert. Die Vergleichseinrichtung ist zum Vergleichen der erfassten Sensortemperatur oder der auf der Sensortemperatur basierenden Größe und der ermittelten Betriebsdaten oder der auf den Betriebsdaten basierenden Größe mittels des Temperatur-Modells unter Berücksichtigung der ermittelten Umgebungstemperatur ausgebildet bzw. konfiguriert. Insbesondere kann das Ermittlungsgerät einen, insbesondere den Umgebungs-Temperatursensor zum Erfassen der Umgebungstemperatur umfassen bzw. aufweisen. Zusätzlich oder alternativ kann das Ermittlungsgerät eine, insbesondere elektrische und/oder kabellose bzw. drahtlose, Empfangseinrichtung zum Empfangen der Umgebungstemperatur umfassen bzw. aufweisen.

Insbesondere kann die Empfangseinrichtung eine UMTS-, WLAN-, und/oder Bluetooth-Empfangseinrichtung oder eine auf einer anderen Technik basierende Empfangseinrichtung umfassen bzw. aufweisen, insbesondere sein. Insbesondere kann das Ermittlungsgerät einen, insbesondere elektrischen, Positionsbestimmungssensor, insbesondere einen Satelliten-Positionsbestimmungsempfänger, zum Ermitteln einer Position, insbesondere des Ermittlungsgeräts, umfassen bzw. aufweisen. Die Empfangseinrichtung kann zum Empfangen der Umgebungstemperatur in Abhängigkeit der ermittelten Position ausgebildet bzw. konfiguriert sein. Weiter zusätzlich oder alternativ kann das Ermittlungsgerät das mobile Gerät sein. Weiter zusätzlich oder alternativ kann das Garten-, Forst- und/oder Baubearbeitungsgerät das Ermittlungsgerät aufweisen bzw. umfassen. In anderen Worten: Das Ermittlungsgerät kann ein Teil des Garten-, Forst- und/oder Baubearbeitungsgeräts bzw. in dieses integriert sein.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Seitenansicht eines erfindungsgemäßen Systems aufweisend ein Garten-, Forst- und/oder Baubearbeitungsgerät aufweisend ein Antriebsmotorsystem, insbesondere aufweisend einen Elektroantriebsmotor, und einen Antriebsakkumulatorpack,
- Fig. 2: eine weitere Seitenansicht des Systems der Fig. 1,
- Fig. 3: eine schematische Ansicht eines Kühl-Luft-Stromes durch das Garten-, Forst- und/oder Baubearbeitungsgerät der Fig. 1 hindurch,
- Fig. 4: eine schematische Ansicht des Systems der Fig. 1 aufweisend ein mobiles Ermittlungsgerät,
- Fig. 5: ein Ablaufdiagramm eines erfindungsgemäßen Verfahrens ausgeführt mittels des Systems,
- Fig. 6: eine Form eines Temperatur-Modells des Systems der Fig. 1 und des Verfahrens,
- Fig. 7: einen Verlauf einer Sensortemperatur und von Betriebsdaten des Antriebsmotorsystems und/oder des Antriebsakkumulatorpacks der Fig. 1 aufweisend einen bestimmungsgemäßen Zustand und einer Modelltemperatur basierend auf den Betriebsdaten über der Zeit,
- Fig. 8: einen Verlauf einer Sensortemperatur und von Betriebsdaten des Antriebsmotorsystems und/oder des Antriebsakkumulatorpacks der Fig. 1 aufweisend einen nicht-bestimmungsgemäßen Zustand und einer Modelltemperatur basierend auf den Betriebsdaten über der Zeit,
- Fig. 9: eine nochmals weitere Seitenansicht des Systems aufweisend ein Garten-, Forst- und/oder Baubearbeitungsgerät aufweisend ein Antriebsmotorsystem, insbesondere aufweisend einen Verbrennungsantriebsmotor, und
- Fig. 10: eine nochmals weitere Seitenansicht des Systems aufweisend ein Ladegerät zum Aufladen des Antriebsakkumulatorpacks aufweisend einen Heizer und/oder einen Kühler und/oder einen Lüfter zum Heizen und/oder zum Kühlen des Antriebsakkumulatorpacks.

### DETAILLIERTE BESCHREIBUNG DER AUSFÜHRUNGSBEISPIELE

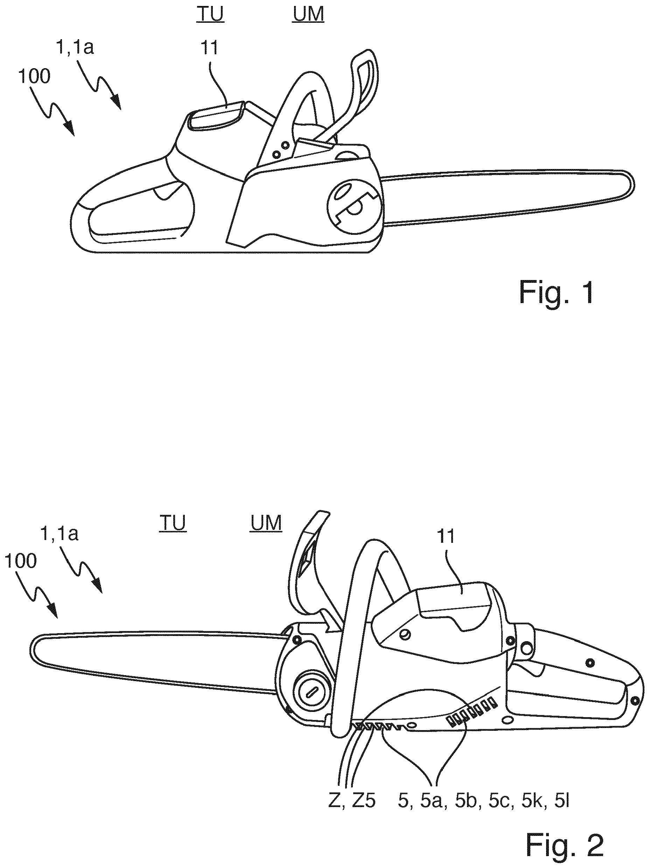

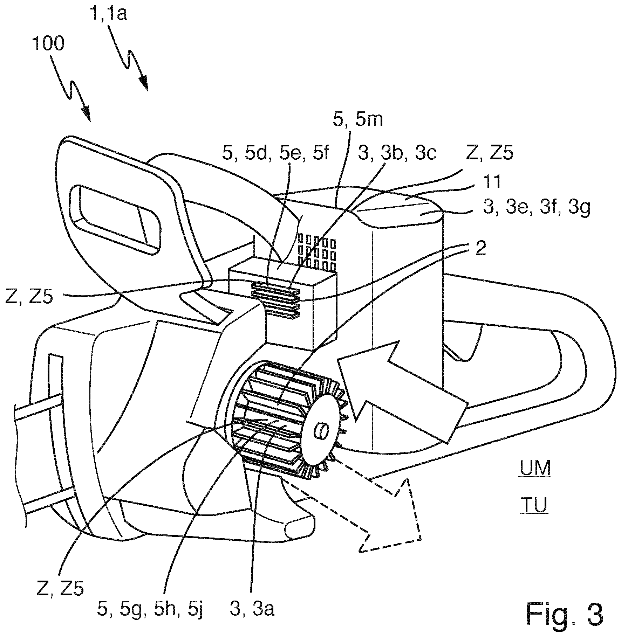

Fig. 1 bis 4, 5, 9 und 10 zeigen ein erfindungsgemäßes System 100 zum Bestimmen einer Information Info über einen Zustand Z eines Antriebsmotorsystems 2 und/oder eines Antriebsakkumulatorpacks 11 eines Garten-, Forst- und/oder Baubearbeitungsgeräts 1. Das System 100 weist eine Erfassungseinrichtung 7, eine Ermittlungseinrichtung 8, eine Vergleichseinrichtung 9 und eine Bestimmungseinrichtung 10 auf. Die Erfassungseinrichtung 7 ist zum Erfassen mindestens einer Sensortemperatur TS mindestens einer Temperatur-Komponente 3 des Antriebsmotorsystems 2 und/oder des Antriebsakkumulatorpacks 11 mittels mindestens eines Komponenten-Temperatursensors 4 gleichzeitig mit und/oder zeitlich nach einem Betrieb des Antriebsmotorsystems 2 und/oder des Antriebsakkumulatorpacks 11, insbesondere und eines Heizers 300 und/oder eines Kühlers 310 und/oder eines Lüfters 320 zum Heizen und/oder zum Kühlen des Antriebsakkumulatorpacks 11, wobei die Temperatur-Komponente 3 sich aufgrund des Betriebs erwärmt oder abkühlt, ausgebildet. Die Ermittlungseinrichtung 8 ist zum Ermitteln von Betriebsdaten BD des Betriebs, wobei die Betriebsdaten BD von der Sensortemperatur TS verschiedenartig sind, ausgebildet. Die Vergleichseinrichtung 9 ist zum Vergleichen der erfassten Sensortemperatur TS oder einer auf der Sensortemperatur basierenden Größe und der ermittelten Betriebsdaten BD oder einer auf den Betriebsdaten BD basierenden Größe TM mittels eines Temperatur-Modells MOD, wobei das Temperatur-Modell MOD auf mindestens einem Modell-Zustand AZyes des Antriebsmotorsystems 2 und/oder des Antriebsakkumulatorpacks 11 basiert, ausgebildet. Die Bestimmungseinrichtung 10 ist zum Bestimmen der Information Info in Abhängigkeit von einem Ergebnis des Vergleichens ausgebildet.

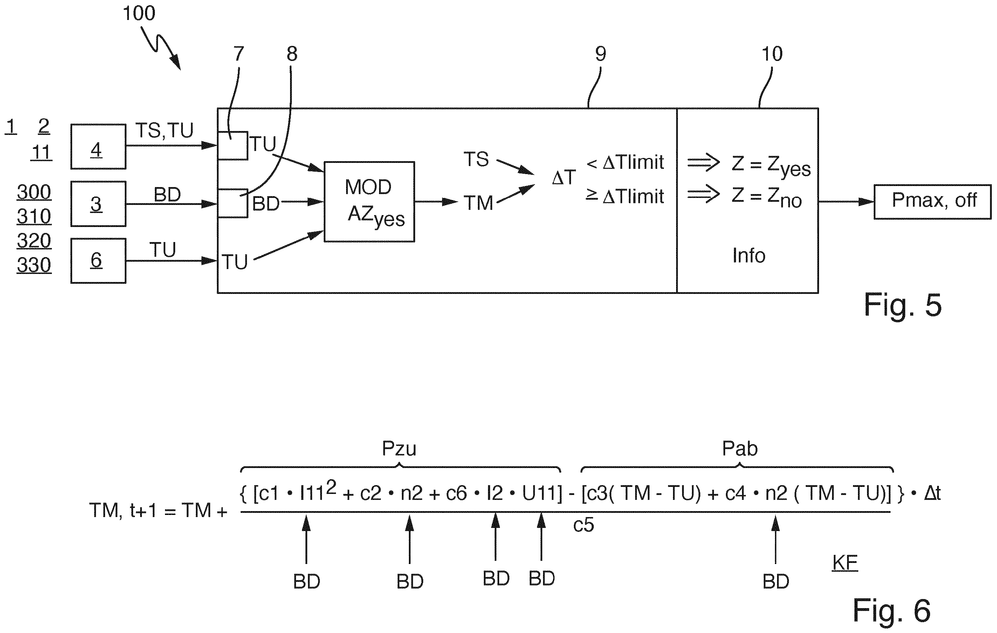

Fig. 5 zeigt ein erfindungsgemäßes Verfahren zum Bestimmen der Information Info über den Zustand Z des Antriebsmotorsystems 2 und/oder des Antriebsakkumulatorpacks 11 des Garten- , Forst- und/oder Baubearbeitungsgeräts 2, insbesondere mittels des Systems 100. Das Verfahren weist die Schritte auf: Erfassen der mindestens einen Sensortemperatur TS der mindestens einen Temperatur-Komponente 3 des Antriebsmotorsystems 2 und/oder des Antriebsakkumulatorpacks 11 mittels des mindestens einen Komponenten-Temperatursensors 4 gleichzeitig mit und/oder zeitlich nach dem Betrieb des Antriebsmotorsystems 2 und/oder des Antriebsakkumulatorpacks 11, insbesondere und des Heizers 300 und/oder des Kühlers 310 und/oder des Lüfters 320 zum Heizen und/oder zum Kühlen des Antriebsakkumulatorpacks 11, insbesondere mittels der Erfassungseinrichtung 7. Die Temperatur-Komponente 3 erwärmt oder kühlt sich aufgrund des Betriebs ab. Ermitteln von den Betriebsdaten BD des Betriebs, insbesondere mittels der Ermittlungseinrichtung 8. Die Betriebsdaten BD sind von der Sensortemperatur TS verschiedenartig. Vergleichen der erfassten Sensortemperatur TS oder der auf der Sensortemperatur basierenden Größe und der ermittelten Betriebsdaten BD oder der auf den Betriebsdaten BD basierenden Größe TM mittels des Temperatur-Modells MOD, insbesondere mittels der Vergleichseinrichtung 9. Das Temperatur-Modell MOD basiert auf dem mindestens einen Modell-Zustand AZyes des Antriebsmotorsystems 2 und/oder des Antriebsakkumulatorpacks 11. Bestimmen der Information Info in Abhängigkeit von dm Ergebnis des Vergleichens, insbesondere mittels der Bestimmungseinrichtung 10.

Im Detail weist das System 100 das Antriebsmotorsystem 2 und/oder den Antriebsakkumulatorpack 11, insbesondere das Garten-, Forst- und/oder Baubearbeitungsgerät 1, insbesondere und den Heizer 300 und/oder den Kühler 310 und/oder den Lüfter 320, insbesondere ein Ladegerät 330 zum Aufladen des Antriebsakkumulatorpacks 11 aufweisend den Heizer 300 und/oder den Kühler 310 und/oder den Lüfter 320, auf.

In dem gezeigten Ausführungsbeispiel ist das Garten-, Forst- und/oder Baubearbeitungsgerät 1 eine Säge 1a. In alternativen Ausführungsbeispielen kann das Garten-, Forst- und/oder Baubearbeitungsgerät ein Hochentaster oder ein Freischneider oder ein Blasgerät oder ein Trennschleifer oder ein Rasenmäher, insbesondere ein Rasenmähroboter, sein.

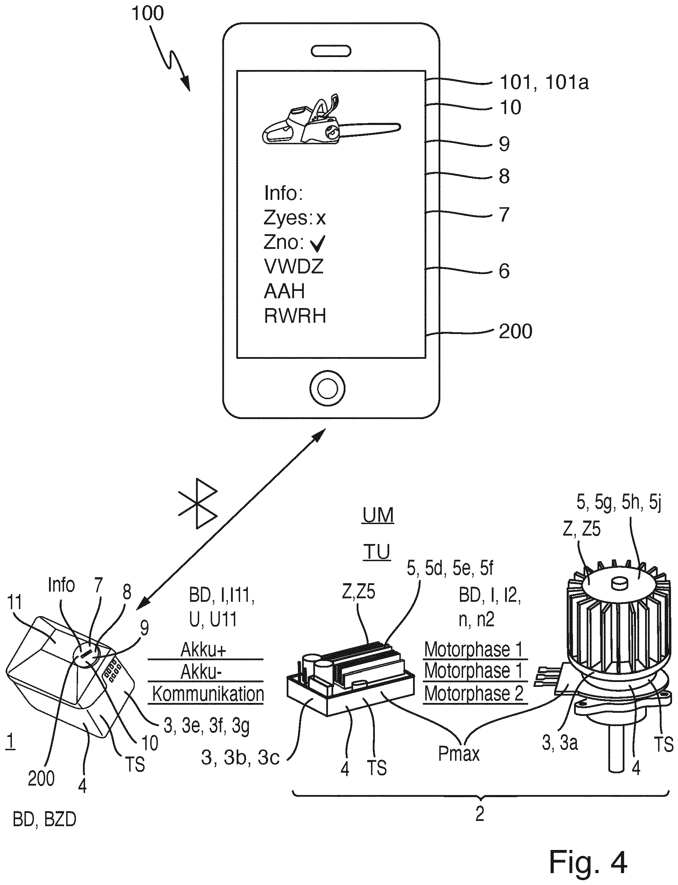

Des Weiteren weist das System 100 ein mobiles Ermittlungsgerät 101, insbesondere in Form eines Smartphones 101a, auf, wie in Fig. 4 gezeigt. Das Ermittlungsgerät 101 ist getrennt von der Temperatur-Komponente 3, insbesondere dem Antriebsmotorsystem 2 und/oder dem Antriebsakkumulatorpack 11, insbesondere dem Garten-, Forst- und/oder Baubearbeitungsgerät 1.

In dem gezeigten Ausführungsbeispiel weisen der Antriebsakkumulatorpack 11 und, in den Fig. 1 bis 4 somit, das Garten-, Forst- und/oder Baubearbeitungsgerät 1 und das Ermittlungsgerät 101, insbesondere jeweils, die Erfassungseinrichtung 7, die Ermittlungseinrichtung 8, die Vergleichseinrichtung 9 und die Bestimmungseinrichtung 10 auf. In alternativen Ausführungsbeispielen kann, insbesondere entweder, das Antriebsmotorsystem oder der Antriebsakkumulatorpack oder das Garten-, Forst- und/oder Baubearbeitungsgerät oder das Ermittlungsgerät die Erfassungseinrichtung, die Ermittlungseinrichtung, die Vergleichseinrichtung und/oder die Bestimmungseinrichtung aufweisen.

Außerdem ist in Fig. 1 bis 4 und 10 die Temperatur-Komponente 3 ein Elektroantriebsmotor 3a oder eine Motorelektronik 3b, insbesondere eine Motor-Leistungselektronik 3c, oder eine Akkumulatorzelle 3e oder eine Packelektronik 3f, insbesondere eine Pack-Leistungselektronik 3g.

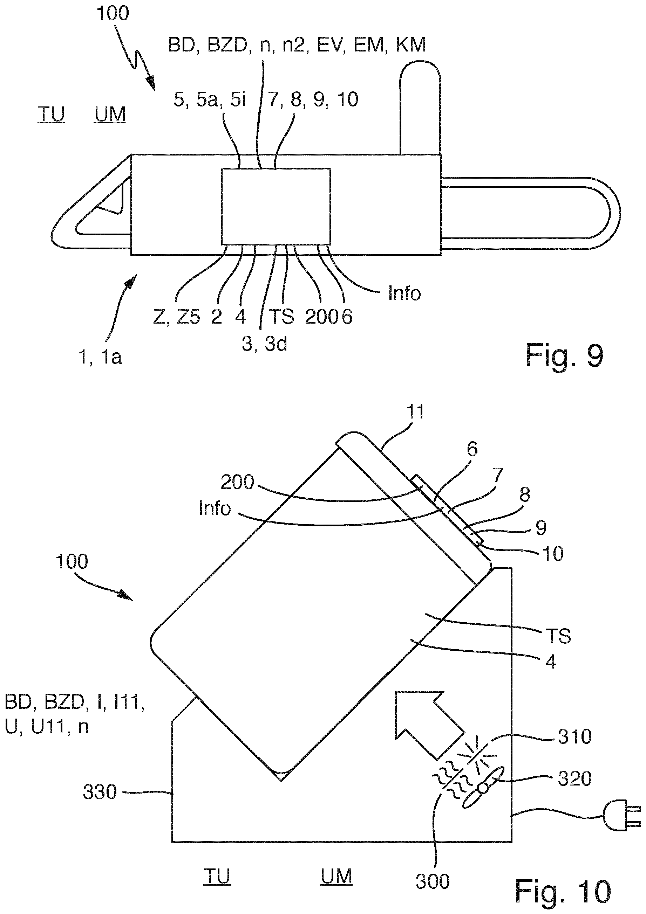

In Fig. 9 ist die die Temperatur-Komponente 3 ein Verbrennungsantriebsmotor 3d.

Insbesondere sind in Fig. 1 bis 4 genau vier Temperatur-Komponenten 3 vorhanden bzw. vorgesehen. In Fig. 9 ist nur eine einzige Temperatur Komponente 3 vorhanden bzw. vorgesehen. Generell kann nur eine einzige Temperatur-Komponente oder mindestens zwei Temperatur-Komponenten können vorhanden bzw. vorgesehen sein.

Weiter sind in Fig. 1 bis 4 genau drei Komponenten-Temperatursensoren 4 vorhanden bzw. vorgesehen. In Fig. 9 ist nur ein einziger Komponenten-Temperatursensor 4 vorhanden bzw. vorgesehen. Generell kann nur ein einziger Komponenten-Temperatursensor oder mindestens zwei Komponenten-Temperatursensoren können vorhanden bzw. vorgesehen sein.

Zudem hängen die Betriebsdaten BD mit einer Energiezufuhr Pzu des Betriebs und/oder einer Wärmeabfuhr Pab aufgrund des Betriebs zusammen, wie in Fig. 6 gezeigt.

Insbesondere weisen in Fig. 1 bis 4 und 10 die Betriebsdaten BD eine Betriebslaufzeitdauer BZD und/oder einen Betriebsstrom I, insbesondere einen Motorstrom I2 und/oder einen Packstrom 111, und/oder eine Betriebsspannung U, insbesondere eine Motorspannung und/oder eine Packspannung U11, und/oder eine Drehzahl n, insbesondere eine Motordrehzahl n2, auf.

In Fig. 9 weisen die Betriebsdaten BD eine Betriebslaufzeitdauer BZD und/oder eine Drehzahl n, insbesondere eine Motordrehzahl n2, und/oder ein Einspritzverhältnis EV und/oder eine Einspritzmenge EM und/oder eine Kraftstoffmenge KM auf.

Des Weiteren weist das Verfahren auf: Bestimmen der Information Info über den Zustand Z5 einer Zustands-Komponente 5 des Antriebsmotorsystems 2 und/oder des Antriebsakkumulatorpacks 11 in Abhängigkeit von dem Ergebnis des Vergleichens, insbesondere mittels der Bestimmungseinrichtung 10.

Insbesondere ist in Fig. 1 bis 4 und 10 die Zustands-Komponente 5 der Elektroantriebsmotor, insbesondere ein Motor-Lager und/oder ein Rotor und/oder ein Stator und/oder mindestens eine Spule, oder die Motorelektronik, insbesondere die Motor-Leistungselektronik, oder ein Luftfilter 5a, insbesondere ein Kühl-Luftfilter 5b, oder ein Luftfiltergitter 5c oder ein Kühler 5d, insbesondere ein Kühlkörper 5e, insbesondere Kühlrippen 5f, und/oder ein Kühl-Lüfter 5g, insbesondere ein Lüfterrad 5h, und/oder ein Kühler-Lager 5j, oder ein Luftein- und/oder Auslass 5k, insbesondere eine Lufteinlass- und/oder Auslassöffnung 5I, oder ein Pack-Schacht 5m oder die Akkumulatorzelle oder die Packelektronik, insbesondere die Pack-Leistungselektronik.

In Fig. 9 ist die Zustands-Komponente 5 der Verbrennungsantriebsmotor, insbesondere ein Motor-Lager, oder ein Steuergerät oder ein Luftfilter 5a, insbesondere ein Verbrennungs-Luftfilter 5i und/oder ein Kühl-Luftfilter, oder ein Luftfiltergitter oder ein Kühler, insbesondere ein Kühlkörper, insbesondere Kühlrippen, und/oder ein Kühl-Lüfter, insbesondere ein Lüfterrad, und/oder ein Kühler-Lager, oder eine Luftein- und/oder Auslass, insbesondere eine Lufteinlass- und/oder Auslassöffnung.

In dem gezeigten Ausführungsbeispiel, insbesondere in Fig. 1 bis 4, weisen/weist das Antriebsmotorsystem 2 und/oder der Antriebsakkumulatorpack 11 mehrere Zustands-Komponenten 5a, 5c, 5d, 5g, 5m auf. In alternativen Ausführungsbeispielen können/kann das Antriebsmotorsystem und/oder der Antriebsakkumulatorpack, insbesondere jeweils, nur eine einzige Zustands-Komponente aufweisen.

Außerdem weist das Verfahren auf: Ermitteln einer Umgebungstemperatur TU einer Umgebung UM des Antriebsmotorsystems 2 und/oder des Antriebsakkumulatorpacks 11, insbesondere des Garten-, Forst- und/oder Baubearbeitungsgeräts 1, insbesondere mittels des Systems 100. Vergleichen der erfassten Sensortemperatur TS oder der auf der Sensortemperatur basierenden Größe und der ermittelten Betriebsdaten oder der auf den Betriebsdaten BD basierenden Größe TM mittels des Temperatur-Modells MOD unter Berücksichtigung der ermittelten Umgebungstemperatur TU, wie in Fig. 6 gezeigt.

Im Detail weist das Verfahren auf: Erfassen der Umgebungstemperatur TU mittels des mindestens einen Komponenten-Temperatursensors 4 zeitlich vor dem Betrieb.

Weiter weist ist das Ermittlungsgerät 101 zum Ermitteln, insbesondere Erfassen, der Umgebungstemperatur TU der Umgebung UM des Antriebsmotorsystems 2 und/oder des Antriebsakkumulatorpacks 11, insbesondere des Garten-, Forst- und/oder Baubearbeitungsgeräts 1, ausgebildet, wie in Fig. 4 gezeigt. Die Vergleichseinrichtung 9 ist zum Vergleichen der erfassten Sensortemperatur TS oder der auf der Sensortemperatur basierenden Größe und der ermittelten Betriebsdaten BD oder der auf den Betriebsdaten BD basierenden Größe TM mittels des Temperatur-Modells MOD unter Berücksichtigung der ermittelten Umgebungstemperatur TU ausgebildet.

In dem gezeigten Ausführungsbeispiel weist das Ermittlungsgerät 101 einen Umgebungs-Temperatursensor 6 zum Erfassen der Umgebungstemperatur TU auf.

Zudem weist das Verfahren auf: Erfassen der Umgebungstemperatur TU mittels des mindestens einen Umgebungs-Temperatursensors 6. Der Umgebungs-Temperatursensor 6 ist verschieden von dem Komponenten-Temperatursensor 4 und/oder getrennt von der Temperatur-Komponente 3, insbesondere dem Antriebsmotorsystem 2 und/oder dem Antriebsakkumulatorpack 11, insbesondere dem Garten-, Forst- und/oder Baubearbeitungsgerät 1.

In alternativen Ausführungsbeispielen kann das Verfahren zusätzlich oder alternativ aufweisen: Empfangen der Umgebungstemperatur, insbesondere mittels des Ermittlungsgeräts.

Zusätzlich oder alternativ kann es in alternativen Ausführungsbeispielen ausreichen die Umgebungstemperatur mittels, insbesondere entweder, des Komponenten-Temperatursensors oder des Umgebungs-Temperatursensors zu erfassen oder mittels des Ermittlungsgeräts zu ermitteln, insbesondere zu erfassen.

In dem gezeigten Ausführungsbeispiel wird die mittels des Komponenten-Temperatursensors 4 erfasste Umgebungstemperatur TU und die mittels des Umgebungs-Temperatursensors 6 erfasste Umgebungstemperatur TU gemittelt. Das Vergleichen wird unter Berücksichtigung der gemittelten Umgebungstemperatur TU ausgeführt.

Insbesondere kann dies unter der Bedingung erfüllen, dass die mittels des Komponenten-Temperatursensors 4 erfasste Umgebungstemperatur TU und die mittels des Umgebungs-Temperatursensors 6 erfasste Umgebungstemperatur TU nur eine geringe Varianz haben (eine hohe Varianz spricht für eine Erwärmung in der Sonne, Abkühlung/Erwärmung durch Positionswechel, ...).

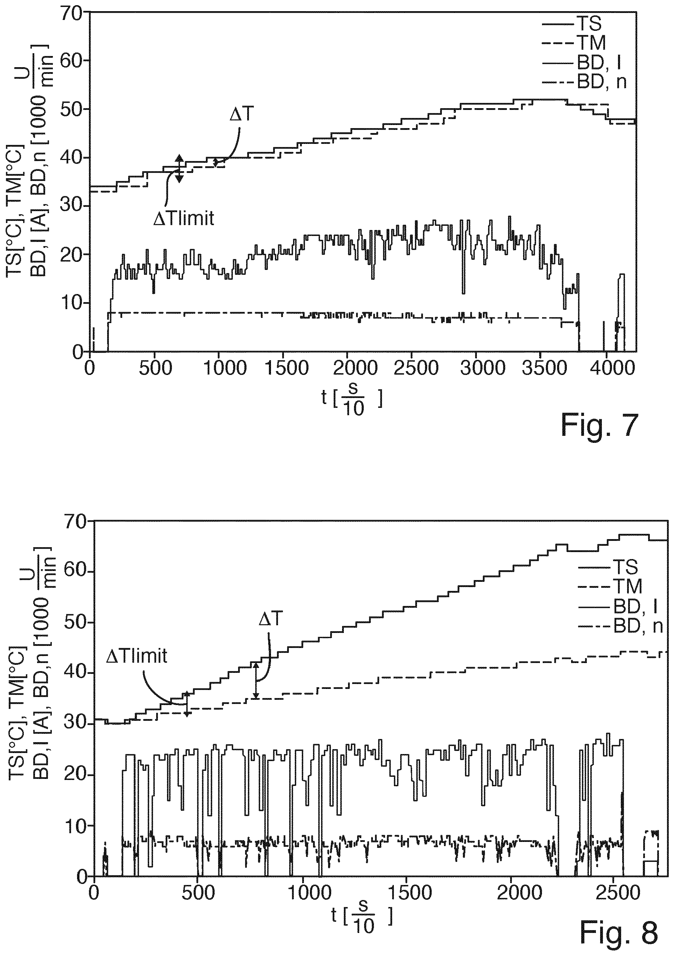

Erfindungsgemäß weist das Verfahren auf: Ermitteln, insbesondere Berechnen, mindestens einer Modelltemperatur TM oder einer für die Modelltemperatur repräsentativen Größe der mindestens einen Temperatur-Komponente 3 basierend auf den ermittelten Betriebsdaten BD mittels des Temperatur-Modells MOD, wie in Fig. 6 gezeigt, insbesondere mittels der Vergleichseinrichtung 9. Vergleichen der erfassten Sensortemperatur TS oder der Größe mit der ermittelten Modelltemperatur TM oder der ermittelten Größe, wie in Fig. 7 und 8 gezeigt, insbesondere mittels der Vergleichseinrichtung 9.

In dem gezeigten Ausführungsbeispiel, insbesondere für die Fig. 1 und 4, wird mittels des in Fig. 6 gezeigten Temperatur-Modells MOD die Modelltemperatur TM zu einem Zeitpunkt t+1 basierend auf der Modelltemperatur TM zu einem zeitlich vorherigen Zeitpunkt t, insbesondere eine Zeiteinheit bzw. eine Abstandszeitdauer Δt zeitlich vorher, und den ermittelten Betriebsdaten BD, insbesondere für die Zeiteinheit Δt, ermittelt, insbesondere berechnet, insbesondere mehrfach wiederholt bzw. in finiten Schritten. Das Temperatur-Modell MOD bzw. die Formel basiert auf der Energiezufuhr PU und der Wärmeabfuhr Pab. Im Detail basiert das Temperatur-Modell MOD bzw. die Formel, insbesondere die Energiezufuhr PU, auf Joulescher Wärme, insbesondere erzeugt durch den Betriebsstrom I, insbesondere den Packstrom 111, und Schaltverluste, insbesondere erzeugt durch den Betriebsstrom I, insbesondere den Motorstrom I2, und die Betriebsspannung U, insbesondere die Packspannung U11, und Reibungswärme, insbesondere erzeugt durch die Drehzahl n, insbesondere die Motordrehzahl n2. Außerdem basiert das Temperatur-Modell MOD bzw. die Formel, insbesondere die Wärmeabfuhr Pab, insbesondere an die Umgebung, auf Konvektion, insbesondere Konvektions-Kühlung, insbesondere durch die Umgebung, insbesondere mit der Umgebungstemperatur TU, und Lüftungs-Kühlung, insbesondere durch die Umgebung, insbesondere mit der Umgebungstemperatur TU, und die Drehzahl n, insbesondere die Motordrehzahl n2.

Insbesondere wird die Joulesche Wärme mit zwei Modellparamatern c1 und c6 des Temperatur-Modells MOD ermittelt bzw. berücksichtigt. Die Reibungswärme wird mit einem Modellparameter c2 ermittelt bzw. berücksichtigt. Die Konvektions-Kühlung wird mit einem Modellparameter c3 ermittelt bzw. berücksichtigt. Die Lüftungs-Kühlung wird mit einem Modellparameter c4 ermittelt bzw. berücksichtigt. Zusätzlich wir eine Wärmekapazität (feste Konstante für die entsprechende Temperatur-Komponente 3) mit einem Modellparameter c5 ermittelt bzw. berücksichtigt, insbesondere um eine Änderung der Modelltemperatur TM pro Zeiteinheit Δt ermitteln, insbesondere berechnen, zu können.

Weiter weist das Verfahren auf: Ermitteln, insbesondere Berechnen, einer Abweichung ΔT der erfassten Sensortemperatur TS oder der auf der Sensortemperatur basierenden Größe und der ermittelten Betriebsdaten BD oder der auf den Betriebsdaten BD basierenden Größe TM mittels des Temperatur-Modells MOD, insbesondere basierend auf einem bestimmungsgemäßen Modell-Zustand AZyes, von der ermittelten Modelltemperatur TM oder der für die Modelltemperatur repräsentativen Größe, insbesondere mehrfach wiederholt bzw. in finiten Schritten, wie in Fig. 7 und 8 gezeigt, insbesondere mittels der Vergleichseinrichtung 9. Bestimmen der Information Info in Abhängigkeit von der ermittelten Abweichung ΔT, insbesondere mittels der Bestimmungseinrichtung 10. Bestimmen der Information Info über entweder einen bestimmungsgemäßen Zustand Zyes, falls die ermittelte Abweichung ΔT kleiner als ein Abweichungsgrenzwert ΔTlimit, insbesondere von z.B. fünf Grad Celsius, ist, und/oder einen nicht-bestimmungsgemäßen Zustand Zno, falls die ermittelte Abweichung ΔT gleich oder größer als der Abweichungsgrenzwert ΔTlimit ist.

In Fig. 7 entspricht, insbesondere gleicht, die Sensortemperatur TS der Modelltemperatur TM. Somit ist die Abweichung ΔT kleiner als der Abweichungsgrenzwert ΔTlimit. Somit wird die Information Info über den bestimmungsgemäßen Zustand Zyes bestimmt.

In Fig. 8 weicht die Sensortemperatur TS von der Modelltemperatur TM ab, insbesondere ist die Sensortemperatur TS höher als die Modelltemperatur TM, insbesondere mit der Zeit. Somit ist die Abweichung ΔT gleich oder größer als der Abweichungsgrenzwert ΔTlimit insbesondere zeitlich nach z.B. sechzig Sekunden. Somit wird die Information Info über den nicht-bestimmungsgemäßen Zustand Zno bestimmt.

In dem gezeigten Ausführungsbeispiel wird die Abweichung ΔT der Sensortemperatur TS von der Modelltemperatur TM ermittelt, insbesondere berechnet. Der Abweichungsgrenzwert ΔTlimit ist derart vorgegeben, dass die Information Info über den bestimmungsgemäßen Zustand Zyes und/oder den nicht-bestimmungsgemäßen Zustand Zno zuverlässig bzw. sicher bestimmt werden kann.

In alternativen Ausführungsbeispielen können eine zeitliche Änderung, insbesondere eine Steigung, der Sensortemperatur und eine zeitliche Änderung, insbesondere Steigung, der Modelltemperatur verglichen werden, insbesondere kann eine Abweichung der Änderungen ermittelt, insbesondere berechnet, werden. Dies kann ermöglichen, insbesondere in dem in Fig. 8 gezeigten Fall, dass einerseits zeitlich schneller, z.B. nach zwanzig Sekunden, die Abweichung gleich oder größer als der Abweichungsgrenzwert sein kann, und andererseits der Abweichungsgrenzwert immer noch derart vorgegeben sein kann, dass die Information, insbesondere über den nicht-bestimmungsgemäßen Zustand, zuverlässig bzw. sicher bestimmt werden kann.

Zusätzlich oder alternativ kann in alternativen Ausführungsbeispielen die Information, insbesondere über den nicht-bestimmungsgemäßen Zustand, in Abhängigkeit einer Größe einer Überschreitung des Abweichungsgrenzwerts durch die Abweichung bestimmt werden, z.B. von größer null Prozent bis hundert Prozent nicht-bestimmungsgemäßer Zustand.

Zudem ist der, insbesondere nicht-bestimmungsgemäße, Zustand Z, Zno ein Verschmutzungs-, Wartungs- und/oder Defektzustand VWDZ.

In Fig. 7 ist der Zustand Z der bestimmungsgemäße Zustand Zyes. Insbesondere sind/ist das Antriebsmotorsystem 2 und/oder der Antriebsakkumulatorpacks 11, insbesondere die Zustands-Komponente/n 5, sauber, wartungsfrei und nicht-defekt bzw. intakt. Somit sind die Energiezufuhr Pzu und die Wärmeabfuhr Pab, insbesondere jeweils, bestimmungsgemäß. Somit entspricht die Sensortemperatur TS der Modelltemperatur TM.

In Fig. 8 ist der Zustand Z der nicht-bestimmungsgemäße Zustand Zno. Insbesondere sind/ist das Antriebsmotorsystem 2 und/oder der Antriebsakkumulatorpacks 11, insbesondere die

Zustands-Komponente/n 5, verschmutzt bzw. dreckig, wartungsbehaftet und/oder defekt. Somit sind/ist die Energiezufuhr Pzu und/oder die Wärmeabfuhr Pab, insbesondere jeweils, nicht-bestimmungsgemäß. Insbesondere ist die Energiezufuhr Pzu höher als bestimmungsgemäß und/oder die Wärmeabfuhr Pab ist niedriger bzw. geringer als bestimmungsgemäß. Somit weicht die Sensortemperatur TS von der Modelltemperatur TM ab, insbesondere ist die Sensortemperatur TS höher als die Modelltemperatur TM.

Insbesondere kann die Modelltemperatur TM, insbesondere immer wieder, zeitlich nach einer vorgegebenen bzw. gewissen Zeitdauer oder einem vorgegebenen bzw. bestimmten Event (z.B. Stillstand, zu niedrige bzw. geringe Drehzahl, zu niedriger bzw. geringe Last, ...) auf die, insbesondere dann aktuelle, Sensortemperatur TS gesetzt werden. Dies kann ermöglichen, einem Abdriften der Modelltemperatur TM, insbesondere aufgrund einer Vereinfache der Realität durch das Temperatur-Modell MOD, entgegenzuwirken.

Des Weiteren weist das Verfahren auf: Absenken mindestens einer maximal freigegebenen Antriebs- und/oder Aufladeleistung Pmax, insbesondere für mindestens eine zugeordnete Drehzahl n, des Antriebsmotorsystems 2 und/oder des Antriebsakkumulatorpacks 11, insbesondere Abschalten des Antriebsmotorsystems 2 und/oder des Antriebsakkumulatorpacks 11, in Abhängigkeit von der bestimmten Information Info, insbesondere über den nicht-bestimmungsgemäßen Zustand Zno, insbesondere mittels des Systems 100, insbesondere mittels der Bestimmungseinrichtung 10.

Außerdem weist das System 100, insbesondere weisen/weist das Antriebsmotorsystem 2 und/oder der Antriebsakkumulatorpack 11 und/oder das Garten-, Forst- und/oder Baubearbeitungsgerät 1 und/oder das Ermittlungsgerät 101, insbesondere jeweils, eine Ausgabe- und Übertragungseinrichtung 200 zum Ausgeben und/oder zum Übertragen der Information Info auf, wie in Fig. 4 gezeigt.

Weiter weist das Verfahren den Schritt auf: Ausgeben und/oder Übertragen der Information Info, insbesondere mittels der Ausgabe- und Übertragungseinrichtung 200. Insbesondere weist die Information Info den bestimmten Zustand Z und/oder einen Absenkungs- und/oder Abschaltungs-Hinweis AAH und/oder einen Reinigungs-, Wartungs- und/oder Reparatur-Hinweis RWRH auf.

Zudem weist das Verfahren auf: Identifizieren der Zustands-Komponente 5a, 5c, 5d, 5g, 5m aufweisend den nicht-bestimmungsgemäßen Zustand Zno, insbesondere mittels Variierens des mindestens einen Modellparameters c1, c2, c3, c4, c5, c6 des Temperatur-Modells MOD und/oder mittels eines, insbesondere erweiterten, Kalman-Filters KF, insbesondere mittels der Vergleichseinrichtung 9.

In dem gezeigten Ausführungsbeispiel ist die Information über die identifizierte Zustands-Komponente, insbesondere weist Information Info die Zustands-Komponente auf.

Z.B. kann der Luftfilter 5a verschmutzt, insbesondere verstopft, und somit nicht gut durchlässig sein, das Luftfiltergitter 5c kann verschmutzt, insbesondere verstopft, und somit nicht gut durchlässig sein, der Kühler 5d kann verschmutzt, insbesondere verdreckt, und somit nicht gut Wärme-abführend sein, der Kühl-Lüfter 5g kann defekt und somit nicht gut Wärme-Abführend und/oder Wärme-erzeugend sein, und/oder der Pack-Schacht 5m kann verschmutzt, insbesondere verstopft, und somit nicht gut durchlässig sein.

Des Weiteren können/kann z.B. die Konvektions-Kühlung und/oder die Lüftungs-Kühlung nicht-bestimmungsgemäß, insbesondere niedriger bzw. geringer, sein, und/oder die Joulesche Wärme und/oder die Reibungswärme können/kann nicht-bestimmungsgemäß, insbesondere höher, sein.

Insbesondere können mehrere Temperatur-Modelle MOD für die mehreren Temperatur-Komponenten 3, insbesondere jeweils, vorgesehen bzw. vorhanden sein. Die Temperatur-Modelle MOD können für die Temperatur-Komponenten 3, insbesondere jeweils, parametriert sein, insbesondere derart, dass sie das Temperaturverhalten für verschiedene Zustände Z, Zyes, Zno des Antriebsmotorsystems 2 und/oder der Antriebsakkumulatorpacks 11 abbilden.

Im Übrigen sind das Garten-, Forst- und/oder Baubearbeitungsgerät 1 und das Ermittlungsgerät 101 zum Zusammenwirken ausgebildet, insbesondere wirken zusammen, insbesondere sind in Signalverbindung.

Wie die gezeigten und oben erläuterten Ausführungsbeispiele deutlich machen, stellt die Erfindung ein vorteilhaftes Verfahren zum Bestimmen einer Information über einen Zustand eines Antriebsmotorsystems und/oder eines Antriebsakkumulatorpacks eines Garten-, Forst- und/oder Baubearbeitungsgeräts und ein vorteilhaftes System zum Bestimmen einer Information über einen Zustand eines Antriebsmotorsystems und/oder eines Antriebsakkumulatorpacks eines Garten-, Forst- und/oder Baubearbeitungsgeräts bereit, wobei das Verfahren und das System jeweils verbesserte Eigenschaften aufweisen, insbesondere mehr Funktionalitäten.

## Patentansprüche

1. Verfahren zum Bestimmen einer Information (Info) über einen nicht-bestimmungsgemäßen Zustand (Z) eines Antriebsmotorsystems (2) und/oder eines Antriebsakkumulatorpacks (11) eines Garten-, Forst- und/oder Baubearbeitungsgeräts (1), wobei das Verfahren die Schritte aufweist:
- Erfassen mindestens einer Sensortemperatur (TS) mindestens einer Temperatur-Komponente (3) des Antriebsmotorsystems (2) und/oder des Antriebsakkumulatorpacks (11) mittels mindestens eines Komponenten-Temperatursensors (4) gleichzeitig mit und/oder zeitlich nach einem Betrieb des Antriebsmotorsystems (2) und/oder des Antriebsakkumulatorpacks (11), wobei die Temperatur-Komponente (3) sich aufgrund des Betriebs erwärmt oder abkühlt,
- Ermitteln von Betriebsdaten (BD) des Betriebs, wobei die Betriebsdaten (BD) von der Sensortemperatur (TS) verschiedenartig sind,
- Ermitteln mindestens einer Modelltemperatur (TM) oder einer für die Modelltemperatur repräsentativen Größe der mindestens einen Temperatur-Komponente (3) basierend auf den ermittelten Betriebsdaten (BD) mittels eines Temperatur-Modells (MOD), und
Vergleichen der erfassten Sensortemperatur (TS) oder einer auf der Sensortemperatur basierenden Größe und der ermittelten Modelltemperatur (TM) oder der ermittelten für die Modelltemperatur repräsentativen Größe, wobei das Temperatur-Modell (MOD) auf mindestens einem Modell-Zustand (AZyes) des Antriebsmotorsystems (2) und/oder des Antriebsakkumulatorpacks (11) basiert, und
- Bestimmen der Information (Info) in Abhängigkeit von einem Ergebnis des Vergleichens.

2. Verfahren nach Anspruch 1,
- wobei die Betriebsdaten (BD) mit einer Energiezufuhr (Pzu) des Betriebs und/oder einer Wärmeabfuhr (Pab) aufgrund des Betriebs zusammenhängen, insbesondere wobei die Betriebsdaten (BD) eine Betriebslaufzeitdauer (BZD) und/oder einen Betriebsstrom (I) und/oder eine Betriebsspannung (U) und/oder eine Drehzahl (n) und/oder ein Einspritzverhältnis (EV) und/oder eine Einspritzmenge (EM) und/oder eine Kraftstoffmenge (KM) aufweisen.

3. Verfahren nach einem der vorhergehenden Ansprüche,
- wobei die Temperatur-Komponente (3) ein Elektroantriebsmotor (3a) oder ein Verbrennungsantriebsmotor (3d) oder eine Motorelektronik (3b), insbesondere eine Motor-Leistungselektronik (3c), oder eine Akkumulatorzelle (3e) oder eine Packelektronik (3f), insbesondere eine Pack-Leistungselektronik (3g), ist.

4. Verfahren nach Anspruch 1, wobei das Verfahren aufweist:
- Ermitteln einer Abweichung (ΔT) der erfassten Sensortemperatur (TS) oder der auf der Sensortemperatur basierenden Größe von der ermittelten Modelltemperatur (TM) oder der für die Modelltemperatur repräsentativen Größe, und
- Bestimmen der Information (Info) in Abhängigkeit von der ermittelten Abweichung (ΔT), insbesondere Bestimmen der Information (Info) über einen bestimmungsgemäßen Zustand (Zyes), falls die ermittelte Abweichung (ΔT) kleiner als ein Abweichungsgrenzwert (ΔTlimit) ist, und/oder einen nicht-bestimmungsgemäßen Zustand (Zno), falls die ermittelte Abweichung (ΔT) gleich oder größer als der Abweichungsgrenzwert (ΔTlimit) ist.

5. Verfahren nach einem der vorhergehenden Ansprüche, wobei das Verfahren den Schritt aufweist:
Absenken mindestens einer maximal freigegebenen Antriebs- und/oder Aufladeleistung (Pmax), insbesondere für mindestens eine zugeordnete Drehzahl (n), des Antriebsmotorsystems (2) und/oder des Antriebsakkumulatorpacks (11), insbesondere Abschalten des Antriebsmotorsystems (2) und/oder des Antriebsakkumulatorpacks (11), in Abhängigkeit von der bestimmten Information (Info), insbesondere über den nicht-bestimmungsgemäßen Zustand (Zno).

6. Verfahren nach einem der vorhergehenden Ansprüche, insbesondere nach Anspruch 5 wobei das Verfahren den Schritt aufweist:
- Ausgeben und/oder Übertragen der Information (Info), insbesondere wobei die Information (Info) einen Absenkungs- und/oder Abschaltungs-Hinweis (AAH) und/oder einen Reinigungs-, Wartungs- und/oder Reparatur-Hinweis (RWRH) aufweist.

7. Verfahren nach einem der vorhergehenden Ansprüche, wobei das Verfahren aufweist:
- Bestimmen der Information (Info) über den Zustand (Z5) einer Zustands-Komponente (5) des Antriebsmotorsystems (2) und/oder des Antriebsakkumulatorpacks (11) in Abhängigkeit von dem Ergebnis des Vergleichens, insbesondere wobei die Zustands-Komponente (5) ein Elektroantriebsmotor oder ein Verbrennungsantriebsmotor, insbesondere ein Motor-Lager und/oder ein Rotor und/oder ein Stator und/oder mindestens eine Spule, oder eine Motorelektronik, insbesondere eine Motor-Leistungselektronik, oder ein Steuergerät oder ein Luftfilter (5a), insbesondere ein Verbrennungs-Luftfilter (5i) und/oder ein Kühl-Luftfilter (5b), oder ein Luftfiltergitter (5c) oder ein Kühler (5d), insbesondere ein Kühlkörper (5e), insbesondere Kühlrippen (5f), und/oder ein Kühl-Lüfter (5g), insbesondere ein Lüfterrad (5h), und/oder ein Kühler-Lager (5j), oder ein Luftein- und/oder Auslass (5k), insbesondere eine Lufteinlass- und/oder Auslassöffnung (5I), oder ein Pack-Schacht (5m) oder eine Akkumulatorzelle oder eine Packelektronik, insbesondere eine Pack-Leistungselektronik, ist.

8. Verfahren nach Ansprüchen 4 und 7,
- wobei das Antriebsmotorsystem (2) und/oder der Antriebsakkumulatorpack (11) mehrere Zustands-Komponenten (5a, 5c, 5d, 5g, 5m) aufweisen/aufweist, und
- wobei das Verfahren aufweist:
- Bestimmen der Information (Info) über den nicht-bestimmungsgemäßen Zustand (Zno), falls die ermittelte Abweichung (ΔT) gleich oder größer als ein Abweichungsgrenzwert (ΔTlimit) ist, und
- Identifizieren der Zustands-Komponente (5a, 5c, 5d, 5g, 5m) aufweisend den nicht-bestimmungsgemäßen Zustand (Z5no), insbesondere mittels Variierens mindestens eines Modellparameters (c1, c2, c3, c4, c5, c6) des Temperatur-Modells (MOD) und/oder mittels eines, insbesondere erweiterten, Kalman-Filters (KF).

9. Verfahren nach einem der vorhergehenden Ansprüche, wobei das Verfahren aufweist:
- Ermitteln einer Umgebungstemperatur (TU) einer Umgebung (UM) des Antriebsmotorsystems (2) und/oder des Antriebsakkumulatorpacks (11), insbesondere des Garten-, Forst- und/oder Baubearbeitungsgeräts (1), und
- Vergleichen der erfassten Sensortemperatur (TS) oder einer auf der Sensortemperatur basierenden Größe und der ermittelten Modelltemperatur (TM) oder der ermittelten für die Modelltemperatur repräsentativen Größe mittels des Temperatur-Modells (MOD) unter Berücksichtigung der ermittelten Umgebungstemperatur (TU).

10. Verfahren nach Anspruch 9, 44-, wobei das Verfahren aufweist:
- Erfassen der Umgebungstemperatur (TU) mittels des mindestens einen Komponenten-Temperatursensors (4) zeitlich vor dem Betrieb.

11. Verfahren nach Anspruch 9 oder 10, wobei das Verfahren aufweist:
- Erfassen der Umgebungstemperatur (TU) mittels mindestens einen Umgebungs-Temperatursensors (6), wobei der Umgebungs-Temperatursensor (6) verschieden von dem Komponenten-Temperatursensor (4) und/oder getrennt von der Temperatur-Komponente (3), insbesondere dem Antriebsmotorsystem (2) und/oder dem Antriebsakkumulatorpack (11), insbesondere dem Garten-, Forst- und/oder Baubearbeitungsgerät (1), ist.

12. System (100) zum Bestimmen einer Information (Info) über einen nicht-bestimmungsgemäßen Zustand (Z) eines Antriebsmotorsystems (2) und/oder eines Antriebsakkumulatorpacks (11) eines Garten-, Forst- und/oder Baubearbeitungsgeräts (1), insbesondere zum Ausführen eines Verfahrens nach einem der vorhergehenden Ansprüche, wobei das System (100) aufweist:
- eine Erfassungseinrichtung (7), wobei die Erfassungseinrichtung (7) zum Erfassen mindestens einer Sensortemperatur (TS) mindestens einer Temperatur-Komponente (3) des Antriebsmotorsystems (2) und/oder des Antriebsakkumulatorpacks (11) mittels mindestens eines Komponenten-Temperatursensors (4) gleichzeitig mit und/oder zeitlich nach einem Betrieb des Antriebsmotorsystems (2) und/oder des Antriebsakkumulatorpacks (11), wobei die Temperatur-Komponente (3) sich aufgrund des Betriebs erwärmt oder abkühlt, ausgebildet ist,
- eine Ermittlungseinrichtung (8), wobei die Ermittlungseinrichtung (8) zum Ermitteln von Betriebsdaten (BD) des Betriebs, wobei die Betriebsdaten (BD) von der Sensortemperatur (TS) verschiedenartig sind, ausgebildet ist,
- eine Vergleichseinrichtung (9), wobei die Vergleichseinrichtung (9) zum Ermitteln mindestens einer Modelltemperatur (TM) oder einer für die Modelltemperatur repräsentativen Größe der mindestens einen Temperatur-Komponente (3) basierend auf den ermittelten Betriebsdaten (BD) mittels eines Temperatur-Modells (MOD), und
zum Vergleichen der erfassten Sensortemperatur (TS) oder einer auf der Sensortemperatur basierenden Größe und der ermittelten Modelltemperatur (TM) oder der ermittelten für die Modelltemperatur repräsentativen Größe,
wobei das Temperatur-Modell (MOD) auf mindestens einem Modell-Zustand (AZyes) des Antriebsmotorsystems (2) und/oder des Antriebsakkumulatorpacks (11) basiert, ausgebildet ist, und
- eine Bestimmungseinrichtung (10), wobei die Bestimmungseinrichtung (10) zum Bestimmen der Information (Info) in Abhängigkeit von einem Ergebnis des Vergleichens ausgebildet ist.

13. System (100) nach Anspruch 12, wobei das System (100) aufweist:
- das Antriebsmotorsystem (2) und/oder den Antriebsakkumulatorpack (11), insbesondere das Garten-, Forst- und/oder Baubearbeitungsgerät (1), und/oder
- ein mobiles Ermittlungsgerät (101), wobei das Ermittlungsgerät (101) getrennt von der Temperatur-Komponente (3), insbesondere dem Antriebsmotorsystem (2) und/oder dem Antriebsakkumulatorpack (11), insbesondere dem Garten-, Forst- und/oder Baubearbeitungsgerät (1), ist, und wobei das Ermittlungsgerät (101) zum Ermitteln einer Umgebungstemperatur (TU) einer Umgebung (UM) des Antriebsmotorsystems (2) und/oder des Antriebsakkumulatorpacks (11), insbesondere des Garten-, Forst- und/oder Baubearbeitungsgeräts (1), ausgebildet ist, und wobei die Vergleichseinrichtung (9) zum Vergleichen der erfassten Sensortemperatur (TS) oder der auf der Sensortemperatur basierenden Größe und der ermittelten Modelltemperatur (TM) oder der ermittelten für die Modelltemperatur repräsentativen Größe mittels des Temperatur-Modells (MOD) unter Berücksichtigung der ermittelten Umgebungstemperatur (TU) ausgebildet ist.

## Claims

1. Method for determining information (Info) about a non-determined state (Z) of a drive motor system (2) and/or of a drive battery pack (11) of a gardening, forestry and/or construction device (1), wherein the method involves the following steps:
- acquiring at least one sensor temperature (TS) of at least one temperature component (3) of the drive motor system (2) and/or of the drive battery pack (11) by way of at least one component temperature sensor (4) at the same time as and/or at a time after an operation of the drive motor system (2) and/or of the drive battery pack (11), wherein the temperature component (3) heats up or cools down due to the operation,
- ascertaining operating data (BD) of the operation, wherein the operating data (BD) are of a different kind than the sensor temperature (TS),
- ascertaining at least one model temperature (TM) or a variable representative of the model temperature of the at least one temperature component (3) based on the ascertained operating data (BD) by way of a temperature model (MOD), and
comparing the acquired sensor temperature (TS) or a variable based on the sensor temperature and the ascertained model temperature (TM) or the ascertained variable representative of the model temperature,
wherein the temperature model (MOD) is based on at least one model state (AZyes) of the drive motor system (2) and/or of the drive battery pack (11), and
- determining the information (Info) on the basis of a result of the comparison.

2. Method according to Claim 1,
- wherein the operating data (BD) are linked to an energy supply (Pzu) of the operation and/or a heat dissipation (Pab) due to the operation, in particular wherein the operating data (BD) contain an operation running duration (BZD) and/or an operating current (I) and/or an operating voltage (U) and/or a speed (n) and/or an injection ratio (EV) and/or an injection quantity (EM) and/or a fuel quantity (KM).

3. Method according to either of the preceding claims,
- wherein the temperature component (3) is an electric drive motor (3a) or a combustion drive motor (3d) or motor electronics (3b), in particular motor power electronics (3c), or a battery cell (3e) or pack electronics (3f), in particular pack power electronics (3g).

4. Method according to Claim 1, wherein the method involves:
- ascertaining a deviation (ΔT) of the acquired sensor temperature (TS) or the variable based on the sensor temperature from the ascertained model temperature (TM) or the variable representative of the model temperature, and
- determining the information (Info) on the basis of the ascertained deviation (ΔT), in particular determining the information (Info) about a determined state (Zyes) if the ascertained deviation (ΔT) is less than a deviation limit value (ΔTlimit), and/or a non-determined state (Zno) if the ascertained deviation (ΔT) is equal to or greater than the deviation limit value (ΔTlimit).

5. Method according to one of the preceding claims, wherein the method involves the step of:
lowering at least one maximum permitted drive and/or charging power (Pmax), in particular for at least one associated speed (n), of the drive motor system (2) and/or of the drive battery pack (11), in particular deactivating the drive motor system (2) and/or the drive battery pack (11), on the basis of the determined information (Info), in particular about the non-determined state (Zno).

6. Method according to one of the preceding claims, in particular according to Claim 5, wherein the method involves the step of:
- outputting and/or transmitting the information (Info), in particular wherein the information (Info) contains a lowering and/or deactivation instruction (AAH) and/or a cleaning, maintenance and/or repair instruction (RWRH) .

7. Method according to one of the preceding claims, wherein the method involves:
- determining the information (Info) about the state (Z5) of a state component (5) of the drive motor system (2) and/or of the drive battery pack (11) on the basis of the result of the comparison, in particular wherein the state component (5) is an electric drive motor or a combustion drive motor, in particular a motor bearing and/or a rotor and/or a stator and/or at least one coil, or motor electronics, in particular motor power electronics, or a controller or an air filter (5a), in particular a combustion air filter (5i) and/or a cooling air filter (5b), or an air filter grating (5c) or a cooler (5d), in particular a heat sink (5e), in particular cooling fins (5f), and/or a cooling fan (5g), in particular a fan wheel (5h), and/or a cooler bearing (5j), or an air inlet and/or outlet (5k), in particular an air inlet and/or outlet opening (51), or a pack shaft (5m) or a battery cell or pack electronics, in particular pack power electronics.

8. Method according to Claims 4 and 7,
- wherein the drive motor system (2) and/or the drive battery pack (11) contain/contains a plurality of state components (5a, 5c, 5d, 5g, 5m), and
- wherein the method involves:
- determining the information (Info) about the non-determined state (Zno) if the ascertained deviation (ΔT) is equal to or greater than a deviation limit value (ΔTlimit), and
- identifying the state component (5a, 5c, 5d, 5g, 5m) having the non-determined state (Z5no), in particular by way of varying at least one model parameter (c1, c2, c3, c4, c5, c6) of the temperature model (MOD) and/or by way of an in particular extended Kalman filter (KF).

9. Method according to one of the preceding claims, wherein the method involves:
- ascertaining an ambient temperature (TU) of surroundings (UM) of the drive motor system (2) and/or of the drive battery pack (11), in particular of the gardening, forestry and/or construction device (1), and
- comparing the acquired sensor temperature (TS) or a variable based on the sensor temperature and the ascertained model temperature (TM) or the ascertained variable representative of the model temperature by way of the temperature model (MOD) taking into consideration the ascertained ambient temperature (TU).

10. Method according to Claim 9, wherein the method involves:
- acquiring the ambient temperature (TU) by way of the at least one component temperature sensor (4) at a time before the operation.

11. Method according to Claim 9 or 10, wherein the method involves:
- acquiring the ambient temperature (TU) by way of at least one ambient temperature sensor (6), wherein the ambient temperature sensor (6) is different from the component temperature sensor (4) and/or separate from the temperature component (3), in particular the drive motor system (2) and/or the drive battery pack (11), in particular the gardening, forestry and/or construction device (1).

12. System (100) for determining information (Info) about a non-determined state (Z) of a drive motor system (2) and/or of a drive battery pack (11) of a gardening, forestry and/or construction device (1), in particular for performing a method according to one of the preceding claims, wherein the system (100) contains:
- an acquisition unit (7), wherein the acquisition unit (7) is designed to acquire at least one sensor temperature (TS) of at least one temperature component (3) of the drive motor system (2) and/or of the drive battery pack (11) by way of at least one component temperature sensor (4) at the same time as and/or at a time after an operation of the drive motor system (2) and/or of the drive battery pack (11), wherein the temperature component (3) heats up or cools down due to the operation,
- an ascertainment unit (8), wherein the ascertainment unit (8) is designed to ascertain operating data (BD) of the operation, wherein the operating data (BD) are of a different kind than the sensor temperature (TS),
- a comparison unit (9), wherein the comparison unit (9) is designed to ascertain at least one model temperature (TM) or a variable representative of the model temperature of the at least one temperature component (3) based on the ascertained operating data (BD) by way of a temperature model (MOD), and
to compare the acquired sensor temperature (TS) or a variable based on the sensor temperature and the ascertained model temperature (TM) or the ascertained variable representative of the model temperature,
wherein the temperature model (MOD) is based on at least one model state (AZyes) of the drive motor system (2) and/or of the drive battery pack (11), and
- a determination unit (10), wherein the determination unit (10) is designed to determine the information (Info) on the basis of a result of the comparison.

13. System (100) according to Claim 12, wherein the system (100) contains:
- the drive motor system (2) and/or the drive battery pack (11), in particular the gardening, forestry and/or construction device (1), and/or
- a mobile ascertainment device (101), wherein the ascertainment device (101) is separate from the temperature component (3), in particular the drive motor system (2) and/or the drive battery pack (11), in particular the gardening, forestry and/or construction device (1), and wherein the ascertainment device (101) is designed to ascertain an ambient temperature (TU) of surroundings (UM) of the drive motor system (2) and/or of the drive battery pack (11), in particular of the gardening, forestry and/or construction device (1), and wherein the comparison unit (9) is designed to compare the acquired sensor temperature (TS) or the variable based on the sensor temperature and the ascertained model temperature (TM) or the ascertained variable representative of the model temperature by way of the temperature model (MOD) taking into consideration the ascertained ambient temperature (TU).

## Revendications

1. Procédé permettant de déterminer une information (Info) concernant un état (Z) non conforme d'un système de moteur d'entraînement (2) et/ou d'un bloc d'accumulateur d'entraînement (11) d'un appareil (1) de jardinage, de foresterie et/ou de bricolage, le procédé comprenant les étapes consistant à :
- détecter au moins une température de capteur (TS) d'au moins un composant thermique (3) du système de moteur d'entraînement (2) et/ou du bloc d'accumulateur d'entraînement (11) au moyen d'au moins un capteur de température de composant (4) en même temps que, et/ou après un fonctionnement du système de moteur d'entraînement (2) et/ou du bloc d'accumulateur d'entraînement (11), dans lequel le composant thermique (3) se réchauffe ou se refroidit en raison du fonctionnement,
- établir des données de fonctionnement (BD) du fonctionnement, les données de fonctionnement (BD) étant différentes de la température de capteur (TS),
- établir au moins une température de modèle (TM) ou une grandeur représentative de la température de modèle dudit au moins un composant thermique (3) sur la base des données de fonctionnement (BD) établies au moyen d'un modèle de température (MOD), et
comparer la température de capteur (TS) détectée ou une grandeur basée sur la température de capteur et la température de modèle (TM) établie ou la grandeur établie représentative de la température de modèle,
dans lequel le modèle de température (MOD) est basé sur au moins un état de modèle (AZyes) du système de moteur d'entraînement (2) et/ou du bloc d'accumulateur d'entraînement (11), et
- déterminer l'information (Info) en fonction d'un résultat de la comparaison.

2. Procédé selon la revendication 1,
- dans lequel les données de fonctionnement (BD) sont liées à un apport en énergie (Pzu) du fonctionnement et/ou à une dissipation de chaleur (Pab) en raison du fonctionnement, en particulier dans lequel les données de fonctionnement (BD) présentent une durée de temps de fonctionnement (BZD) et/ou un courant de fonctionnement (I) et/ou une tension de fonctionnement (U) et/ou une vitesse de rotation (n) et/ou un rapport d'injection (EV) et/ou une quantité d'injection (EM) et/ou une quantité de carburant (KM).

3. Procédé selon l'une quelconque des revendications précédentes,
- dans lequel le composant thermique (3) est un moteur d'entraînement électrique (3a) ou un moteur d'entraînement thermique (3d) ou une électronique de moteur (3b), en particulier une électronique de puissance de moteur (3c), ou une cellule d'accumulateur (3e) ou une électronique de bloc (3f), en particulier une électronique de puissance de bloc (3g).

4. Procédé selon la revendication 1, le procédé présentant les étapes consistant à :
- établir un écart (ΔT) de la température de capteur (TS) détectée ou de la grandeur basée sur la température de capteur par rapport à la température de modèle (TM) établie ou à la grandeur établie représentative de la température de modèle, et
- déterminer l'information (Info) en fonction de l'écart (ΔT) établi, en particulier déterminer l'information (Info) concernant un état conforme (Zyes) si l'écart (ΔT) établi est inférieur à une valeur limite d'écart (ΔTlimit) et/ou un état non conforme (Zno) si l'écart (ΔT) établi est égal ou supérieur à la valeur limite d'écart (ΔTlimit).

5. Procédé selon l'une quelconque des revendications précédentes,
le procédé présentant l'étape consistant à :
abaisser au moins une puissance d'entraînement et/ou de recharge libérée maximale (Pmax), en particulier pour au moins une vitesse de rotation (n) associée, du système de moteur d'entraînement (2) et/ou du bloc d'accumulateur d'entraînement (11), en particulier mettre hors tension le système de moteur d'entraînement (2) et/ou le bloc d'accumulateur d'entraînement (11), en fonction de l'information (Info) déterminée, en particulier concernant l'état non conforme (Zno).

6. Procédé selon l'une quelconque des revendications précédentes, en particulier selon la revendication 5,
le procédé présentant l'étape consistant à :
- sortir et/ou transmettre l'information (Info), en particulier dans lequel l'information (Info) présente une indication d'abaissement et/ou de mise hors tension (AAH) et/ou une indication de nettoyage, de maintenance et/ou de réparation (RWRH).

7. Procédé selon l'une quelconque des revendications précédentes, le procédé présentant l'étape consistant à :
- déterminer l'information (Info) concernant l'état (Z5) d'un composant d'état (5) du système de moteur d'entraînement (2) et/ou du bloc d'accumulateur d'entraînement (11) en fonction du résultat de la comparaison, en particulier dans lequel le composant d'état (5) est un moteur d'entraînement électrique ou un moteur d'entraînement thermique, en particulier un palier de moteur et/ou un rotor et/ou un stator et/ou au moins une bobine, ou une électronique de moteur, en particulier une électronique de puissance de moteur, ou un appareil de commande ou un filtre à air (5a), en particulier un filtre à air de combustion (5i) et/ou un filtre à air de refroidissement (5b), ou une grille de filtre à air (5c) ou un refroidisseur (5d), en particulier un dissipateur thermique (5e), en particulier des ailettes de refroidissement (5f), et/ou un ventilateur de refroidissement (5g), en particulier une roue de ventilateur (5h), et/ou un palier de refroidisseur (5j), ou une entrée et/ou sortie d'air (5k), en particulier une ouverture d'entrée et/ou de sortie d'air (51), ou un compartiment de bloc (5m) ou une cellule d'accumulateur ou une électronique de bloc, en particulier une électronique de puissance de bloc.

8. Procédé selon les revendications 4 et 7,
- dans lequel le système de moteur d'entraînement (2) et/ou le bloc d'accumulateur d'entraînement (11) présente(nt) plusieurs composants d'état (5a, 5c, 5d, 5g, 5m), et
- le procédé présentant les étapes consistant à :
- déterminer l'information (Info) concernant l'état non conforme (Zno) si l'écart (ΔT) établi est égal ou supérieur à une valeur limite d'écart (ΔTlimit), et
- identifier le composant d'état (5a, 5c, 5d, 5g, 5m) présentant l'état non conforme (Z5no), en particulier en faisant varier au moins un paramètre de modèle (c1, c2, c3, c4, c5, c6) du modèle de température (MOD) et/ou au moyen d'un filtre de Kalman (KF), en particulier étendu.

9. Procédé selon l'une quelconque des revendications précédentes, le procédé présentant l'étape consistant à :
- établir une température ambiante (TU) d'un environnement (UM) du système de moteur d'entraînement (2) et/ou du bloc d'accumulateur d'entraînement (11), en particulier de l'appareil (1) de jardinage, de foresterie et/ou de bricolage, et
- comparer la température de capteur (TS) détectée ou une grandeur basée sur la température de capteur et la température de modèle (TM) établie ou la grandeur établie représentative de la température de modèle au moyen du modèle de température (MOD) en tenant compte de la température ambiante (TU) établie.

10. Procédé selon la revendication 9, le procédé présentant l'étape consistant à :
- détecter la température ambiante (TU) au moyen du au moins un capteur de température de composant (4) avant le fonctionnement.

11. Procédé selon la revendication 9 ou 10, le procédé présentant l'étape consistant à :
- détecter la température ambiante (TU) au moyen d'au moins un capteur de température ambiante (6), le capteur de température ambiante (6) étant différent du capteur de température de composant (4) et/ou séparé du composant thermique (3), en particulier du système de moteur d'entraînement (2) et/ou du bloc d'accumulateur d'entraînement (11), en particulier de l'appareil (1) de jardinage, de foresterie et/ou de bricolage.

12. Système (100) permettant de déterminer une information (Info) concernant un état non conforme (Z) d'un système de moteur d'entraînement (2) et/ou d'un bloc d'accumulateur d'entraînement (11) d'un appareil (1) de jardinage, de foresterie et/ou de bricolage, en particulier pour exécuter un procédé selon l'une quelconque des revendications précédentes, le système (100) présentant :
- un dispositif de détection (7), le dispositif de détection (7) étant réalisé pour détecter au moins une température de capteur (TS) d'au moins un composant thermique (3) du système de moteur d'entraînement (2) et/ou du bloc d'accumulateur d'entraînement (11) au moyen d'au moins un capteur de température de composant (4) en même temps et/ou après un fonctionnement du système de moteur d'entraînement (2) et/ou du bloc d'accumulateur d'entraînement (11), dans lequel le composant thermique (3) se réchauffe ou se refroidit en raison du fonctionnement,
- un dispositif d'établissement (8), le dispositif d'établissement (8) étant réalisé pour établir des données de fonctionnement (BD) du fonctionnement, les données de fonctionnement (BD) étant différentes de la température de capteur (TS),
- un dispositif de comparaison (9), le dispositif de comparaison (9) étant réalisé pour établir au moins une température de modèle (TM) ou une grandeur représentative de la température de modèle dudit au moins un composant thermique (3) sur la base des données de fonctionnement (BD) établies au moyen d'un modèle de température (MOD), et
comparer la température de capteur (TS) détectée ou une grandeur basée sur la température de capteur et la température de modèle (TM) établie ou la grandeur établie représentative de la température de modèle,
dans lequel le modèle de température (MOD) est basé sur au moins un état de modèle (AZyes) du système de moteur d'entraînement (2) et/ou du bloc d'accumulateur d'entraînement (11), et
- un dispositif de détermination (10), le dispositif de détermination (10) étant réalisé pour déterminer l'information (Info) en fonction d'un résultat de la comparaison.

13. Système (100) selon la revendication 12, le système (100) présentant :
- le système de moteur d'entraînement (2) et/ou le bloc d'accumulateur d'entraînement (11), en particulier l'appareil (1) de jardinage, de foresterie et/ou de bricolage, et/ou
- un appareil d'établissement mobile (101), l'appareil d'établissement (101) étant séparé du composant thermique (3), en particulier du système de moteur d'entraînement (2) et/ou du bloc d'accumulateur d'entraînement (11), en particulier de l'appareil de jardinage, de foresterie et/ou de bricolage (1), et dans lequel l'appareil d'établissement (101) est réalisé pour établir une température ambiante (TU) d'un environnement (UM) du système de moteur d'entraînement (2) et/ou du bloc d'accumulateur d'entraînement (11), en particulier de l'appareil (1) de jardinage, de foresterie et/ou de bricolage, et dans lequel le dispositif de comparaison (9) est réalisé pour comparer la température de capteur (TS) détectée ou la grandeur basée sur la température de capteur et la température de modèle (TM) établie ou la grandeur établie représentative de la température de modèle au moyen du modèle de température (MOD) en tenant compte de la température ambiante (TU) établie.
